# EUROPEAN PATENT APPLICATION

(11) **EP 1 510 903 A2**
(43) Date of publication of application: **02.03.2005**
(21) Application number: 04255117.6
(22) Date of filing: 25.08.2004
(51) Int. Cl.: G06F 1/00

(54) **Print data generation method and apparatus, client terminal, printer server, image forming apparatus and computer product**

(30) Priority: 26.08.2003 JP 2003301754
(71) Applicant: Ricoh Company Ltd., Tokyo 143-8555 (JP)
(72) Inventor: Maruyama, Akeo, Ricoh Company, Limited, Ohta-ku, Tokyo 143-8555 (JP)
(74) Representative: Leeming, John Gerard

(57) **Abstract**

Each one of a plurality of client PCs (100) includes an intermediate data generating unit (104) that generates intermediate data independent of a printer apparatus (130) from application data; and an encryption processing unit (105) that encrypts the intermediate data. The encrypted intermediate data is stored in a HDD (126) of a printer server (120). The printer server includes the HDD (126); a decryption processing unit (122) that decrypts the encrypted intermediate data in the HDD (126) according to a request form any of the client PCs (100); a print data converting unit (123) that converts the decrypted intermediate data into print data dependent on the printer apparatus (130); and a spooler (125) that sends the print data to a printer apparatus (130).

## Description

The present document incorporates by reference the entire contents of Japanese priority document, 2003-301754 filed in Japan on August 26, 2003.

The present invention relates to technology for generating print data that is independent of a printer apparatus on which it is printed.

Conventionally, a printer driver is generally known which generates print independent data that is independent of a printer apparatus, so-called intermediate data, in generating print data peculiar to the printer apparatus from application data, for which a print request is received from an application, to print the print data.

Such intermediate data is in a format independent of a printer apparatus as in the technique disclosed in, for example, Japanese Patent Application Laid-Open Publication No. 2000-035861 and Japanese Patent Application Laid-Open Publication No. H11-184657. Therefore, in general, the intermediate data is stored in a storage or the like in a printer server to reuse the intermediate data for printing from a client personal computer (PC) or the like at the time when a document of identical application data is printed, generate a preview screen from the intermediate data, or print a single document by combining a plurality of the intermediate data.

However, when the printer server, the client PC, and the printer apparatus are connected by a network like a Local Area Network (LAN) and the intermediate data is stored in the printer server, security for document data is insufficient because a holder in bad faith can refer to and change the intermediate data on the printer server illegally.

In addition, when the intermediate data is generated by a printer driver of the client PC and stored in the printer server, or when the intermediate data is stored on the client PC side, it is likely that the intermediate data is intercepted by a holder in bad faith because the intermediate data flows on a network between the client PC and the printer server.

Depending upon data to be printed, while it is not desirable that others know the data, it may still be desired to reuse intermediate data. Thus, there is an increasing demand that efficient print processing is performed while security of a print document is maintained.

It is an object of the present invention to solve at least the problems in the conventional technology.

A print data generation method according to an aspect of the present invention is for generating print data of a format dependent on a printer apparatus, which is connected to a network, from application data, which is a print object, generated by an application. The print data generation method includes generating print independent data and rendering information that is independent of the printer apparatus, wherein the print independent data including job information, which includes attribute information concerning a print job and encryption information concerning encryption; encrypting the rendering information that is in the print independent data to thereby generate encrypted print independent data; and storing the encrypted print independent data in a storing unit.

A computer program according to another aspect of the present invention realizes the above method on a computer.

A client terminal according to still another aspect of the present invention sends a print request with respect to a printer apparatus on a network to a printer server connected to the network. The client terminal includes an independent data generating unit that generates, from application data, which is a print object, generated by an application, print independent data and rendering information that is independent of the printer apparatus, wherein the print independent data including job information, which includes attribute information concerning a print job and encryption information concerning encryption; and an encrypting unit that encrypts the rendering information that is in the print independent data and to thereby generate encrypted print independent data and sends the encrypted print independent data to the printer server.

A client terminal according to still another aspect of the present invention sends a print request with respect to a printer apparatus on a network to a printer server connected to the network. The client terminal includes an independent data generating unit that generates, from application data, which is a print object, generated by an application, print independent data and rendering information that is independent of the printer apparatus, wherein the print independent data including job information, which includes attribute information concerning a print job and encryption information concerning encryption; an encrypting unit that encrypts the rendering information that is in the print independent data and to thereby generate encrypted print independent data and sends the encrypted print independent data to the printer server; a decrypting unit that receives the encrypted print independent data from the printer server and decrypts the encrypted print independent data based on the encryption information of the job information to thereby obtain decrypted print independent data; a converting unit that converts the decrypted print independent data into print data, which is a print object, dependent on the printer apparatus; and a sending unit that sends the print data to the printer apparatus.

A client terminal according to still another aspect of the present invention sends a print request with respect to a printer apparatus on a network to a printer server connected to the network. The client terminal includes an independent data generating unit that generates, from application data, which is a print object, generated by an application, print independent data and rendering information that is independent of the printer apparatus, wherein the print independent data including job information, which includes attribute information concerning a print job and encryption information concerning encryption; an encrypting unit that encrypts the rendering information that is in the print independent data and to thereby generate encrypted print independent data; and a storing unit that stores the encrypted print independent data.

A client terminal according to still another aspect of the present invention sends a print request with respect to a printer apparatus on a network to a printer server connected to the network. The client terminal includes an independent data generating unit that generates, from application data, which is a print object, generated by an application, print independent data and rendering information that is independent of the printer apparatus, wherein the print independent data including job information, which includes attribute information concerning a print job and encryption information concerning encryption; a sending unit that sends the print independent data to the printer server; a converting unit that receives decrypted print independent data from the printer server and converts the decrypted print independent data into print data, which is a print object, dependent on the printer apparatus; and a sending unit that sends the print data to the printer apparatus.

A printer server according to still another aspect of the present invention performs print processing with respect to a printer apparatus connected to a network in response to a print request from a client terminal connected to the network. The printer server includes a receiving unit that receives encrypted print independent data independent of the printer apparatus from the client terminal; a storing unit that stores the encrypted print independent data; a decrypting unit that decrypts the encrypted print independent data stored in the storing unit based on encryption information included in the print data according to a request from the client terminal to thereby generate decrypted print independent data; a converting unit that converts the decrypted print independent data into print data, which is a print object, dependent on the printer apparatus; and a sending unit that sends the print data to the printer apparatus.

A printer server according to still another aspect of the present invention performs print processing with respect to a printer apparatus connected to a network in response to a print request from a client terminal connected to the network. The printer server includes a receiving unit that receives encrypted print independent data from the client terminal; a storing unit that stores the encrypted print independent data; and a sending unit that sends the encrypted print independent data stored in the storing unit to the client terminal according to a request from the client terminal.

A printer server according to still another aspect of the present invention performs print processing with respect to a printer apparatus connected to a network in response to a print request from a client terminal connected to the network. The printer server includes a decrypting unit that receives encrypted print independent data from the client terminal and decrypts the encrypted print independent data based on encryption information included in the print independent data to thereby generate decrypted print independent data; a converting unit that converts the decrypted print independent data into print data, which is a print object, dependent on the printer apparatus; and a sending unit that sends the print data to the printer apparatus.

A printer server according to still another aspect of the present invention performs print processing with respect to a printer apparatus connected to a network in response to a print request from a client terminal connected to the network. The printer server includes an encrypting unit that receives print independent data including job information, which includes attribute information concerning a print job and encryption information concerning encryption, and rendering information independent of the printer apparatus from the client terminal and encrypts the rendering information in the print independent data to thereby generate encrypted print independent data; a storing unit that stores the encrypted print independent data; a decrypting unit that decrypts the encrypted print independent data stored in the storing unit based on the encryption information of the job information to thereby obtain print independent data decrypted print independent data; and a sending unit that sends the decrypted print independent data to the client terminal.

A print data generation apparatus according to still another aspect of the present invention performs print processing with respect to a print apparatus connected to a network. The print data generation apparatus includes an independent data generating unit that generates, from application data, which is a print object, generated by an application, print independent data and rendering information that is independent of the printer apparatus, wherein the print independent data including job information, which includes attribute information concerning a print job and encryption information concerning encryption; an encrypting unit that encrypts the rendering information that is in the print independent data and to thereby generate encrypted print independent data; a storing unit that stores the encrypted print independent data; a decrypting unit that decrypts the encrypted print independent data stored in the storing unit based on encryption information of the job information to thereby obtain decrypted print independent data; a converting unit that converts the decrypted print independent data into print data dependent on the printer apparatus; and a sending unit that sends the print data to the printer apparatus.

An image forming apparatus according to still another aspect of the present invention performs image formation processing with respect to a printer engine in response to a print request from a client terminal connected to a network. The image forming apparatus includes a receiving unit that receives print independent data including job information, which includes attribute information concerning a print job and encryption information concerning encryption, and rendering information independent of the printer engine from the client terminal; a storing unit that stores the print independent data; a decrypting unit that decrypts encrypted print independent data stored in the storing unit based on the encryption information of the job information according to a request from the client terminal to thereby generate decrypted print independent data; a converting unit that converts the decrypted print independent data into print data, which is a print object, dependent on the printer engine; and a sending unit that sends the print data to the printer engine.

An image forming apparatus according to still another aspect of the present invention performs image formation processing with respect to a printer engine in response to a print request from a client terminal connected to a network. The image forming apparatus includes a decrypting unit that receives encrypted print independent data including job information, which includes attribute information concerning a print job and encryption information concerning encryption, and rendering information independent of the printer engine from the client terminal and decrypts the encrypted print independent data based on the encryption information of the job information to thereby generate decrypted print independent data; a converting unit that converts the decrypted print independent data into print data, which is a print object, dependent on the printer engine; and a sending unit that sends the print data to the printer engine.

The other objects, features, and advantages of the present invention are specifically set forth in or will become apparent from the following detailed description of the invention when read in conjunction with the accompanying drawings.

The invention will now be described by way of non-limiting example with reference to the accompanying drawings, in which:
Fig. 1 is a block diagram of a network structure and a functional structure of a printer system according to a first embodiment of the present invention;
Fig. 2A is a data structure of intermediate data;
Fig. 2B is a data structure of page information in the intermediate data;
Fig. 3 is a data structure of the intermediate data after manipulation processing;
Fig. 4 is a flowchart of a generation processing for generating intermediate data in the printer system shown in Fig. 1;
Fig. 5 is a flowchart of a reprint processing for reprinting in the printer system shown in Fig. 1;
Fig. 6 is a block diagram of a network structure and a functional structure of a printer system according to a modification of the first embodiment;
Fig. 7 is a flowchart showing a procedure of reprint processing in the printer system according to the modification of the first embodiment;
Fig. 8 is a block diagram showing a network structure and a functional structure of a printer system according to a second embodiment of the present invention;
Fig. 9 is a flowchart showing a procedure of reprint processing in the printer system according to the second embodiment;
Fig. 10 is a block diagram showing a network structure and a functional structure of a printer system according to a third embodiment of the present invention;
Fig. 11 is a flowchart showing a procedure of generation processing for intermediate data in the printer system according to the third embodiment;
Fig. 12 is a flowchart showing a procedure of reprint processing in the printer system according to the third embodiment;
Fig. 13 is a block diagram showing a network structure and a functional structure of a printer system according to a fourth embodiment of the present invention;
Fig, 14 is a flowchart showing a procedure of generation processing for intermediate data in the printer system according to the fourth embodiment;
Fig. 15 is a flowchart showing a procedure of reprint processing in the printer system according to the fourth embodiment;
Fig. 16 is a block diagram showing a network structure and a functional structure of a printer system according to a fifth embodiment of the present invention;
Fig. 17 is a flowchart showing a procedure of reprint processing in the printer system according to the fifth embodiment;
Fig. 18 is a block diagram showing a network structure and a functional structure of a printer system according to a sixth embodiment of the present invention;
Fig. 19 is a flowchart showing a procedure of generation processing for intermediate data in the printer system according to the sixth embodiment;
Fig. 20 is a flowchart showing a procedure of reprint processing in the printer system according to the sixth embodiment;
Fig. 21 is a block diagram showing a network structure and a functional structure of a printer system according to a seventh embodiment of the present invention; and
Fig. 22 is a flowchart showing a procedure of reprint processing in the printer system according to the seventh embodiment.

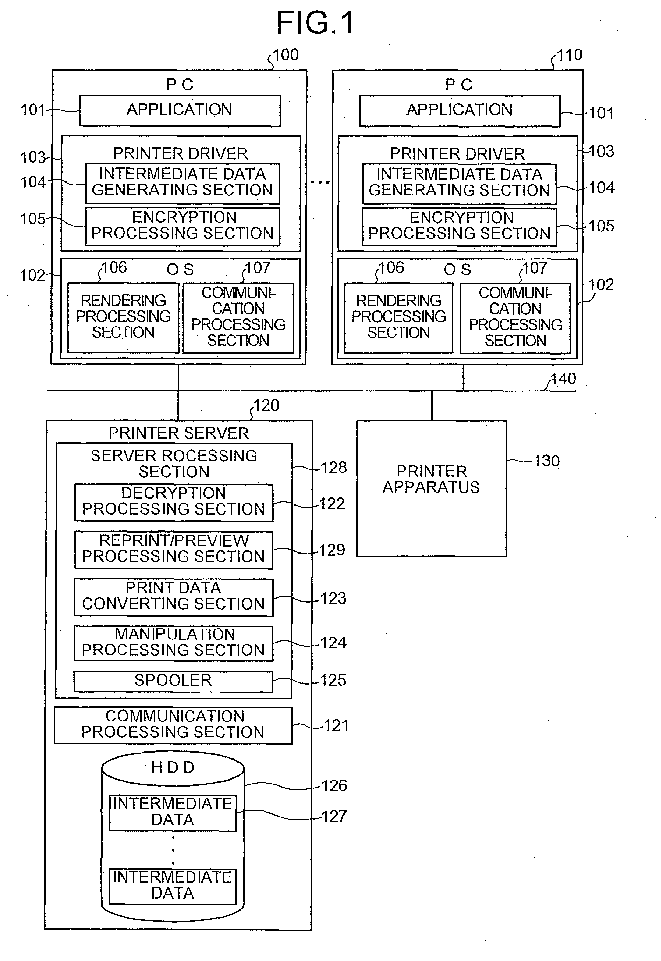

Fig. 1 is a block diagram of a network structure and a functional structure of a printer system according to a first embodiment of the present invention.

The printer system according to the first embodiment includes plural personal computers (PCs) 100 to 110 that request printing of a document file generated by an application, a printer server 120 that generates print data in response to the print request from the PCs 100 to 110, and a printer apparatus 130 that prints the print data. The PCs 100 to 110, the printer server 120, and the printer apparatus 130 are connected to a network 140 such as the Ethernet (registered trademark), whereby a LAN environment is established.

The PCs 100 to 110 constitute client terminals in the present invention and mainly include an application 101, an operating system (OS) 102, and a printer driver 103.

A word processor application like Microsoft® Word®, a document display application like Adobe® Acrobat Reader®, a spreadsheet application like Microsoft® Excel®, and the like correspond to the application 101. Printing of document data generated or displayed by such application 101 is requested from a print dialog box of the application 101.

The OS 102 is a versatile OS like Microsoft® Windows® or UNIX® Linux®. Such an OS 102 has a rendering processing section 106 and a communication processing section 107.

The rendering processing section 106 converts document data, for which a print request is received from the application 101, into a graphic image. When the OS 102 is Microsoft® Windows ®, a graphic device interface (GDI) corresponds to the rendering processing section 106.

The communication processing section 107 controls communication between the PCs 100 to 110 and apparatuses on a network 140 like a printer server 120 and a printer apparatus 130 according to a protocol like TCP/IP.

The printer driver 103 operates on the OS 102 and mainly includes an intermediate data generating section 104 and an encryption processing section 105.

The intermediate data generating section 104 generates intermediate data of a format independent of the printer apparatus 130 from the graphic image data generated from the document data for which printing is requested. This intermediate data generating section 104 constitutes independent data generating means in the present invention. Here, the intermediate data is metadata for printing of a format independent of the printer apparatus 130.

The encryption processing section 105 encrypts the intermediate data generated by the intermediate data generating section 104 using an encryption key designated by a user or the like according to a public key cryptography, a secret key cryptography, or the like. Then, the encryption processing section 105 stores the encrypted intermediate data in a hard disk device (HDD) 126 on the printer server 120 via the communication processing section 107. Here, in the encryption of the intermediate key, only page information constituting the intermediate data is encrypted. Note that details of the intermediate data will be described later.

The printer server 120 stores encrypted intermediate data 127, which is generated by the PCs 100 to 110, in the HDD 126 in response to print requests from the PCs 100 to 110. In addition, the printer server 120 converts the intermediate data stored in the HDD 126 into print data dependent on the printer apparatus 130 and sends the print data to the printer apparatus 130 according to a reprint request or a preview request from the PCs 100 to 110.

The printer server 120 mainly includes a communication processing section 121 and a server processing section 128 that are parts of an OS. The communication processing section 121 controls communication between the printer server 120 and apparatuses on the network 140 such as the PCs 100 to 110 and the printer apparatus 130 according to a protocol such as TCP/IP.

The server processing section 128 operates as a server using the printer drivers 103 operating in the PCs 100 to 110 as clients to realize various functions. The server processing section 128 mainly includes a decryption processing section 122, a reprint/preview processing section 129, a print data converting section 123, a manipulation processing section 124, and a spooler 125. In addition, the printer server 120 includes a HDD 126 that stores the intermediate data 127 and various data.

The decryption processing section 122 reads out the encrypted intermediate data 127 from the HDD 126 and decrypts the intermediate data 127 with an encryption key. In the decryption, only page information constituting intermediate data is decrypted with reference to encryption information (an encryption algorithm, a part of an encryption key, etc.) included in job information constituting the intermediate data. Note that the decryption processing section 122 acquires the encryption key by receiving it from the PCs 100 to 110.

The reprint/preview processing section 129 performs reprint and preview processing using the intermediate data decrypted by the decryption processing unit 122 according to a request from the PCs 100 to 110. More specifically, the reprint/preview processing section 129 performs processing for delivering decrypted intermediate data to be an object of a reprint request to the print data converting section 123, delivering single intermediate data generated by combining plural decrypted data to the print data converting section 123, and sending the decrypted intermediate data to the PCs 100 to 110 that have sent a preview request.

The print data converting section 123 converts the intermediate data decrypted by the decryption processing section 122 and the intermediate data generated by the reprint/preview processing section 129 into print data of a data format dependent on the printer apparatus 130. A page description language (PDL) format and the like correspond to such a format of print data.

The manipulation processing section 124 applies manipulation processing like addition or deletion of supplementary data like a creator's name and a date of creation to print data.

The spooler 125 accumulates the print data or the print data subjected to manipulation processing as printer jobs and sequentially sends the printer jobs to the printer apparatus 130.

The HDD 126 stores intermediate data and various data. A folder (or directory) for intermediate data storage constitutes a network file system, and data can be written in the folder and referred to from the PCs 100 to 110 side.

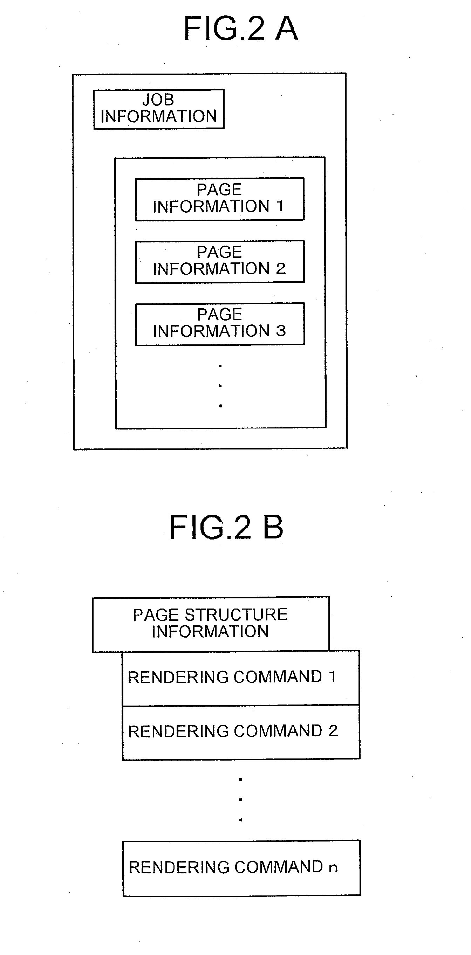

Next, intermediate data to be used in the printer system of this embodiment will be explained. Fig. 2A is a data structure diagram of intermediate data, and Fig. 2B is a data structure diagram of page information in the intermediate data.

As shown in Fig. 2A, the intermediate data is constituted by one or plural pieces of page information 1 to n and job information. The job information includes job attribute information and encryption information concerning a print job. The job attribute information includes, specifically, a creator, a date and time of creation of a job, a job title, and a size of each page of page information. In addition, the encryption information includes, specifically, an encryption algorithm and a part of an encryption key to be used. The page information 1 to n becomes an object of encryption by the encryption processing section, and the job information does not become an object of encryption. As shown in Fig. 2B, each piece of page information is constituted by one or plural rendering commands 1 to n. The rendering command is a rendering instruction for graphic image data generated by the rendering processing section 106.

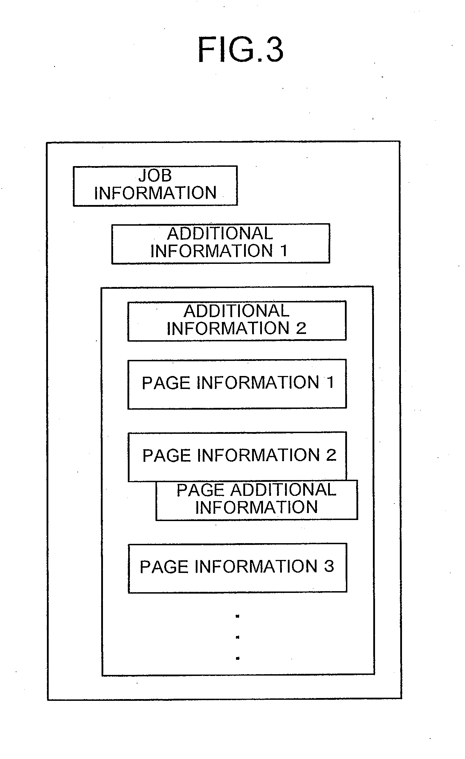

The manipulation processing section 124 applies various kinds of manipulation processing to the intermediate data. For example, when additional information is added to the intermediate data, there are three patterns of addition. Fig. 3 is a data structure diagram of the intermediate data after manipulation processing by the manipulation processing section.

As shown in Fig. 3, the three patterns mean a case in which additional information is added outside the page information 1 to n as indicated by additional information 1, a case in which additional information is added in the same level as the page information 1 to n as indicated by additional information 2, and a case in which additional information is added inside the page information as indicated by page additional information. The additional information added in the same level as or inside the page information like the additional information 2 and the page additional information becomes an object of encryption. On the other hand, when the additional information is added outside the page information 1 to n like the additional information 1, the additional information does not become an object of encryption. Some additional information that becomes an object of encryption and other additional information does not become an object of encryption in this way. This is because, for example, when a sender, a title, and the like of a mail are added as additional information as a job title in printing from a mail processing program, whereas it is desired to give confidentiality to such information in some cases, confidentiality is not high depending upon information to be added.

Respective programs for the printer driver 103 and the server processing section 128 according to this embodiment are recorded in a computer readable recording medium such as a CD-ROM, a flexible disk (FD), or a DVD in an installable format or an executable format and provided.

The respective programs for the printer driver 103 and the server processing section 128 according to this embodiment may be stored on a computer connected to a network such as the Internet and downloaded through the network and provided. In addition, the respective programs for the printer driver 103 and the server processing section 128 according to this embodiment may be provided or distributed through a network such as the Internet.

The respective programs for the printer driver 103 and the server processing section 128 according to this embodiment are adapted to be read out from the storage medium and executed to be loaded onto a main storage, whereby the respective sections explained in the above-mentioned functional structure are generated on the main storage.

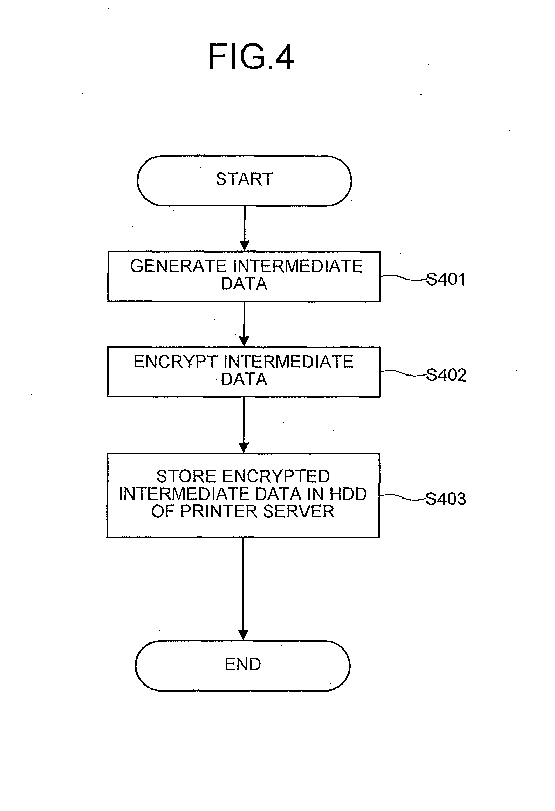

Next, generation processing and reprint processing for intermediate data by the printer system according to this embodiment constituted as described above will be explained. In this embodiment, intermediate data generated by the PC 100 is assumed to be used for reprinting by the PC 100 or the PC 110. Fig. 4 is a flowchart showing a procedure of generation processing for intermediate data by the PC 100.

In the PC 100, when a print request for document data generated by the application 101 is sent, the rendering processing section 106 of the OS 102 generates a graphic image from the document data, and the intermediate data generating section 104 generates intermediate data of a format independent of the printer apparatus 130 as shown in Figs. 2A and 2B from this graphic image (step S401).

Next, the encryption processing section 105 applies encryption processing to the generated intermediate data using an encryption key like a public key or a secret key (step S402). Here, as the encryption key, an encryption key designated by a user of the application in advance is used. In the encryption of the intermediate data, only the page information constituted by rendering data, for which it is desired to keep confidentiality, and the additional information 2 and the page additional information in Fig. 3 are encrypted, and the job information is not encrypted. This is because, if the entire intermediate data is encrypted, division processing for the job information and the page information is difficult in the case of decryption, and processing efficiency falls. In addition, only specific page information of the intermediate data may be encrypted. This is because, if the entire page information is encrypted when it is know in advance that only a specific page of the intermediate data is reused, processing efficiency falls due to cutting processing for the specific page after the entire page information is decrypted.

Then, the encrypted intermediate data is stored in the HD 126 of the printer server 120 via the communication processing section 107 (step S403).

The intermediate data 127 stored in the HDD 126 of the printer server 120 in this way is subjected to decryption processing by the decryption processing section 122 of the server processing section 128, and then converted into print data by the print data converting section 123 and sent to the printer apparatus 130 by the spooler 125.

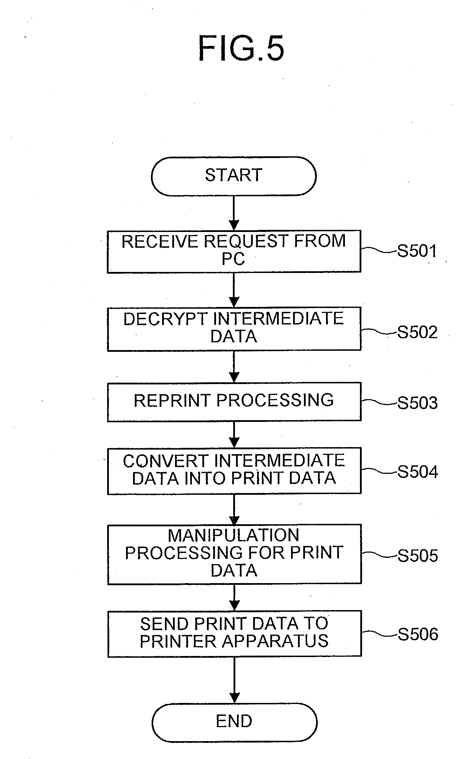

Next, reprint processing using the intermediate data 127 stored in the HDD 126 of the printer server 120 will be explained. Fig. 5 is a flowchart showing a procedure of the reprint processing.

When the application 101 of the PC 110 sends a reprint request to the printer server 120, the communication processing section 121 receives the request from the PC 110 (step S501 ). The server processing section 128 reads out the intermediate data 127, which has become an object of the reprint request, from the HDD 126 and applies decryption processing to the intermediate data 127 with the decryption processing section 122 (step S502). In the decryption processing, the server processing section 128 decrypts the page information, and the additional information 2 and the page additional information in Fig. 3 with reference to encryption information (an encryption algorithm, a part of an encryption key, etc.) included in the job information, which is not encrypted, of the intermediate data. The intermediate data 127, which is the object of the request, is read out from the HDD 126 entirely, and the decryption processing applied to the respective pieces of information in the intermediate data 127.

Then, the reprint/preview processing section 129 combines a plurality of the intermediate data subjected to the decryption processing to generate single intermediate data (step S503). Subsequently, the print data converting section 123 performed reprint processing (step S504). More specifically, the print data converting section 123 converts the intermediate data into print data of a format dependent on the printer apparatus 130, for example, a PDL format (step S504). The manipulation processing section 124 further applies various kinds of manipulation processing to the print data (step S505). The spooler 125 sends the processed print data (see Fig. 3) to the printer apparatus 130 through the network 140 via the communication processing section 121 (step S506).

Note that, when a preview request is received from the application 101 of the PC 110, the reprint/preview processing section 129 sends the intermediate data decrypted in step S502 to the PC 110 that has sent the request. The application 101 of the PC 110 performs the preview processing.

In this way, in the printer system according to the first embodiment, intermediate data independent of the printer apparatus 130 is generated from document data, which is a print object, created by the application 101 and is subjected to the encryption processing, and the encrypted intermediate data is stored in the HDD 126 of the printer server 120. Thus, when reusable intermediate data is shared by plural users, the intermediate data, which is sent from the PCs 100 to 110 to the printer server 120 on the network 140, can be prevented from being intercepted by a holder in bad faith. In addition, since the intermediate data shared by the plural users is stored in the HDD 126 of the printer server 120 in an encrypted state, the intermediate data stored in the HDD 126 of the printer server 120 can be prevented from being used illegally.

A modification of the first embodiment will be explained.

in the printer system according to the first embodiment, conversion of intermediate data into print data and transmission of the print data to a printer apparatus are performed on the printer server side. However, it is also possible to perform conversion of the intermediate data 127 stored in the printer server into print data and transmission of the print data to the printer apparatus on the PCs 100 to 110 side.

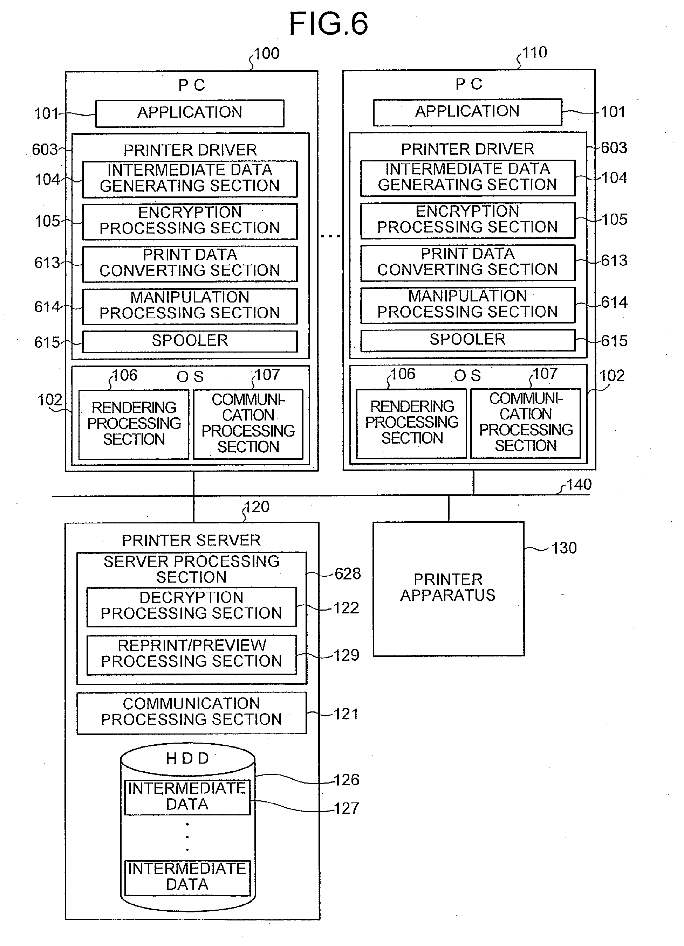

Fig. 6 is a block diagram showing a network structure and a functional structure of a printer system according to the modification of the first embodiment. As shown in Fig. 6, a printer driver 603 of the PC 100 to 110 includes a print data converting section 613, a manipulation processing section 614, and a spooler 615 in addition to an intermediate data generation section 104, an encryption processing section 105.

The print data converting section 613 receives intermediate data decrypted by the decryption processing section 122 of the printer server 120 or intermediate data generated by the reprint/preview processing section 129 via the communication processing section 107 and converts the intermediate data into print data of a data format dependent on the printer apparatus 130. The manipulation processing section 124 applied manipulation processing such as addition or deletion of supplementary data such as a creator's name and a date of creation to the print data. The spooler 125 accumulates the print data or the print data subjected to processing as a printer job and sequentially sends the printer jobs to the printer apparatus 130 from the PCs 100 to 110 side.

On the other hand, a server processing section 628 of the printer server 120 includes the decryption processing section 122 and the reprint/preview processing section 129. A print data converting section, a manipulation processing section, and a spooler are not present in the server processing section 628.

The decryption processing section 122 reads out the encrypted intermediate data 127 from the HDD 126 and decrypts the intermediate data 127 with an encryption key. Note that the encryption key is acquired by transmission from the PCs 100 to 110.

The reprint/preview processing section 129 performs reprint and preview processing using the intermediate data decrypted by the decryption processing section 122 according to a request form the PCs 100 to 110. More specifically, the reprint/preview processing section 129 performs processing for sending decrypted intermediate data to be an object of a reprint request to the PCs 100 to 110 via the communication processing section 121, sending single intermediate data generated by combining plural decrypted intermediate data to the PCs 100 to 110 via the communication processing section 121, and sending the decrypted intermediate data to the PCs 100 to 110 that have sent a preview request.

Next, reprint processing using intermediate data by the printer system according to the modification of the first embodiment constituted as described above will be explained. Note that generation processing for intermediate data is performed in the same manner as the printer system according to the first embodiment, and the intermediate data is stored in the HDD 126 of the printer server 120.

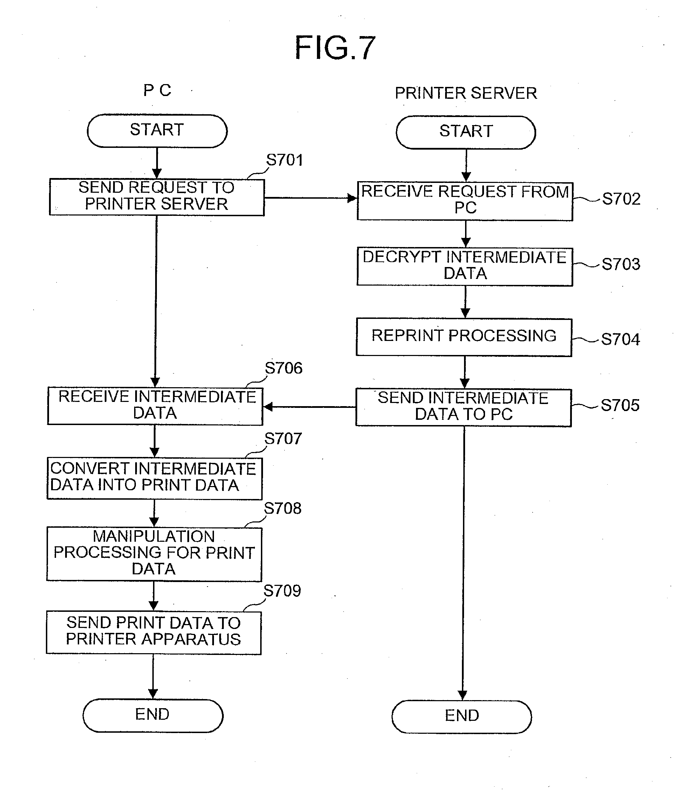

In the modification of the first embodiment, it is also assumed that intermediate data generated by the PC 100 is used for reprinting by the CP 100 or the PC 110. Fig. 7 is a flowchart showing a procedure of reprint processing.

When the application 101 of the PC 110 sends a reprint request to the printer server 120 (step S701), the communication processing section 121 receives the request from the PC 110 (step S702). The server processing section 628 reads out the intermediate data 127, which has become an object of the reprint request, from the HDD 126 and applies decryption processing to the intermediate data 127 with the decryption processing section 122 (step S703). Here, the intermediate data 127, which is the object of the request, is read out from the HDD 126 entirely, and decryption processing is applied to respective pieces of information of the intermediate data 127. The decryption processing is performed in the same manner as the first embodiment.

Then, the reprint/preview processing section 129 performs reprint processing (step S704). More specifically, the reprint/preview processing section 129 combines plural intermediate data subjected to the decryption processing to generate single intermediate data. The reprint/preview processing section 129 sends the generated single intermediate data to the PC 110 via the communication processing section 121 (step S705).

In the PC 110, the communication processing section 107 receives the intermediate data (step S706), and the print data converting section 613 converts the received intermediate data into print data of a format dependent on the printer apparatus 130 (step S707). The manipulation processing section 614 further applies various kinds of manipulation processing to the print data (step S708). The spooler 615 sends the processed print data to the printer apparatus 130 through the network 140 via the communication processing section 107 (step S709).

Note that, when a preview request is received from the application 101, the reprint/preview processing section 129 sends the intermediate data decrypted in step S703 to the PC110 that has sent the request, and the application 101 of the PC 110 performs preview processing.

In this way, in the printer system according to the modification of the first embodiment, PCs 100 to 110 receive decrypted intermediate data from the printer server 120, apply the reprint processing to the intermediate data, convert the intermediate data into print data, which is a print object, dependent on the printer apparatus 130, apply processing to the print data, and send the print data to the printer apparatus 130. Thus, efficient print processing according to reuse of print independent data can be preformed while security of the intermediate data is improved.

A second embodiment of the present invention will be explained now. In the printer system according to the first embodiment, decryption processing for intermediate data stored in a printer server is performed on the printer sever side. However, in a printer system according to the second embodiment, intermediate data is simply stored in a printer sever, and a series of processing such as generation, encryption, and decryption of the intermediate data is performed entirely on a PC side.

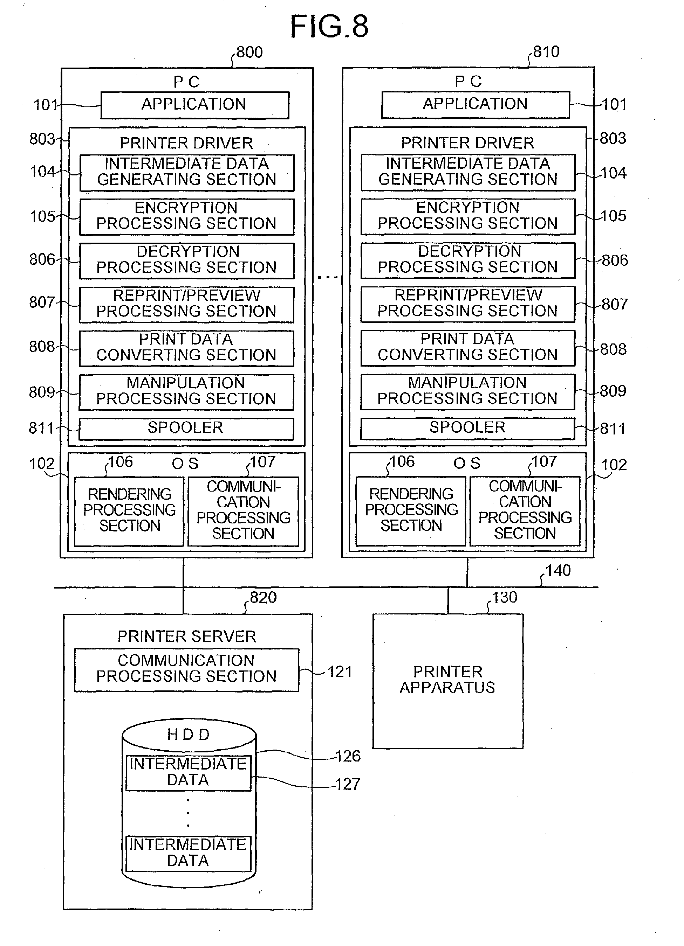

Fig. 8 is a block diagram showing a network structure and a functional structure of the printer system according to the second embodiment.

The printer system according to the second embodiment includes plural PCs 800 to 810 that request printing of a document file generated by an application, a printer server 820 that performs decryption processing for intermediate data in response to the print request from the PCs 800 to 810, and the printer apparatus 130 that prints the print data. The plural PCs 800 to 810, the printer server 820, and the printer apparatus 130 are connected to the network 140 such as the Ethernet (registered trademark), whereby a LAN environment is established.

The PCs 800 to 810 constitute client terminals in the present invention and mainly include the application 101, the operating system (OS) 102, and the printer driver 103. Note that the applications 101 and the OS 102 have the same functions as those in the first embodiment.

The printer driver 803 operates on the OS 102 and mainly includes the intermediate data generating section 104, the encryption processing section 105, a decryption processing section 506, a reprint/preview processing section 807, a print data converting section 808, a manipulation processing section 809, and a spooler 811. Note that the intermediate data generating section 104 and the encryption processing section 105 have the same functions as those in the first embodiment.

The decryption processing section 806 reads out the encrypted intermediate data 127 from the HDD 126 of the printer server 820 and decrypts the intermediate data 127 with an encryption key.

The reprint/preview processing section 807 performs reprint and preview processing and the like using the intermediate data decrypted by the decryption processing unit 806. More specifically, the reprint/preview processing section 807 performs processing for delivering decrypted intermediate data to be an object of a reprint request to the print data converting section 808, delivering single intermediate data generated by combining plural decrypted data to the print data converting section 808, and sending the decrypted intermediate data to the application 101 that has sent a preview request.

The print data converting section 808 converts the intermediate data decrypted by the decryption processing section 806 and the intermediate data generated by the reprint/preview processing section 807 into print data of a data format dependent on the printer apparatus 130.

The manipulation processing section 809 applies manipulation processing such as addition or deletion of supplementary data like a creator's name and a date of creation to print data.

The spooler 811 accumulates the print data or the print data subjected to processing as printer jobs and sequentially sends the printer jobs to the printer apparatus 130.

The printer server 120 mainly includes the communication processing section 121, which is a part of an OS, and the HDD 126. The communication processing section 121 controls communication between the printer server 820 and the apparatuses on the network 140 such as the PCs 800 to 810 and the printer apparatus 130 according to a protocol such as TCP/IP as in the first embodiment.

The HDD 126 stores intermediate data and various data. A folder (or directory) for intermediate data storage constitutes a network file system, and data can be written in the folder and referred to from the PCs 800 to 810 side.

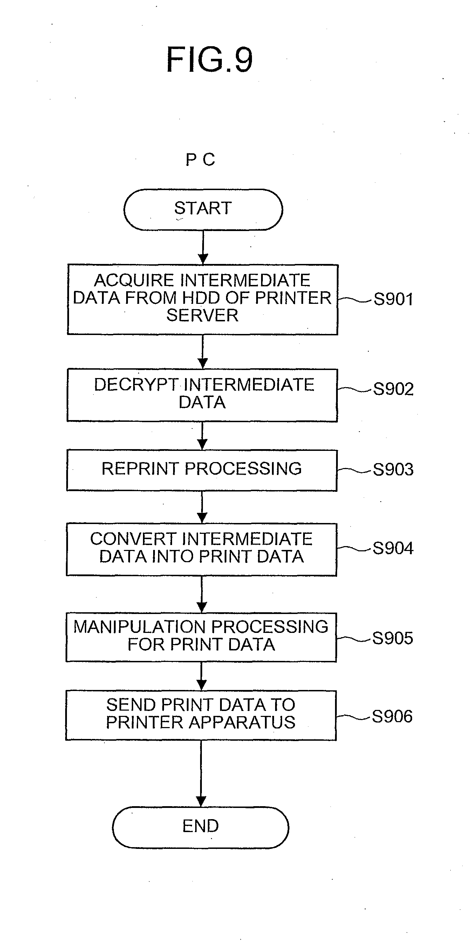

Next, reprint processing by the printer system according to this embodiment constituted as described above will be explained. In this embodiment, it is assumed that intermediate data generated by the PC 800 is used for reprinting by the PC 800 or the PC 810. Generation processing for intermediate data is performed in the same manner as the printer system according to the first embodiment, and the intermediate data is stored in the HDD 126 of the printer server 120. Fig. 9 is a flowchart showing a procedure of the reprint processing.

When the application 101 of the PC 810 sends a reprint request, the decryption processing section 806 acquires the intermediate data 127, which has become an object of the print request, from the HDD 126 of the printer server 820 through a network (step S901), reads out the intermediate data 127 and applies decryption processing to the intermediate data 127. Here, the intermediate data 127, which is the object of the request, is read out from the HDD 126 entirely, and the decryption processing applied to the respective pieces of information in the intermediate data 127.

Then, the reprint/preview processing section 807 performs reprint processing (step S903). More specifically, the reprint/preview processing section 807 combines a plurality of the intermediate data subjected to the decryption processing to generate single intermediate data. Subsequently, the print data converting section 808 converts the intermediate data into print data of a format dependent on the printer apparatus 130, for example, a PDL format (step S904). The manipulation processing section 809 further applies various kinds of processing to the print data (step S905). The spooler 811 sends the processed print data to the printer apparatus 130 through the network 140 via the communication processing section 107 (step S906).

Note that, when a preview request is received from the application 101, the reprint/preview processing section 807 sends the intermediate data decrypted in step S902 to the application 101, and the application 101 performs preview processing.

In this way, in the printer system according to the second embodiment, intermediate data independent of the printer apparatus 130 is generated from document data, which is a print object, created by the application 101 and is subjected to the encryption processing, and the encrypted intermediate data is stored in the HDD 126 of the printer server 820. When the intermediate data is used, the PCs 800 to 810 receive the encrypted intermediate data from the printer server 820, apply decryption processing and reprint processing to the intermediate data to convert the intermediate data into print data, which is a print object, dependent on the printer apparatus 130, apply manipulation processing to the print data, and send the print data to the printer apparatus 130. Thus, since the intermediate data is sent from the PCs 800 to 810 to the printer server 820 in an encrypted state, and when the intermediate data is reused, the intermediate data is sent from the printer server 820 to the PCs 800 to 810 in the encrypted state, the intermediate data flowing on the network 140 can be prevented from being intercepted by a holder in bad faith. In addition, since the intermediate data shared by plural users is stored in the HDD 126 of the printer server 820 in an encrypted state, the intermediate data can be prevented from being used illegally by a holder in bad faith.

Note that, in the printer system according to this embodiment, the reprint/preview processing section 807, the print data converting section 808, the manipulation processing section 809, and the spooler 811 are provided on the PCs 800 to 810 side. However, all or a part of these sections may be provided on the printer server 820 side. For example, all of the reprint/preview processing section 807, the print data converting section 808, the manipulation processing section 809, and the spooler 811 are provided in the printer server 820. In this case, the printer system only has to be constituted such that, after intermediate data is decrypted on the PCs 800 to 810 side, the decrypted intermediate data is sent to the printer server 820 and subjected to reprint/preview processing, print data converting processing, manipulation processing, and processing for transmission to the printer apparatus 130 on the printer server 820 side.

A third embodiment of the present invention will be explained now. The printer systems according to the first and the second embodiments store intermediate data on a printer server side such that the intermediate data can be used in plural PCs. However, a printer system according to the third embodiment stores intermediate data on a PC side.

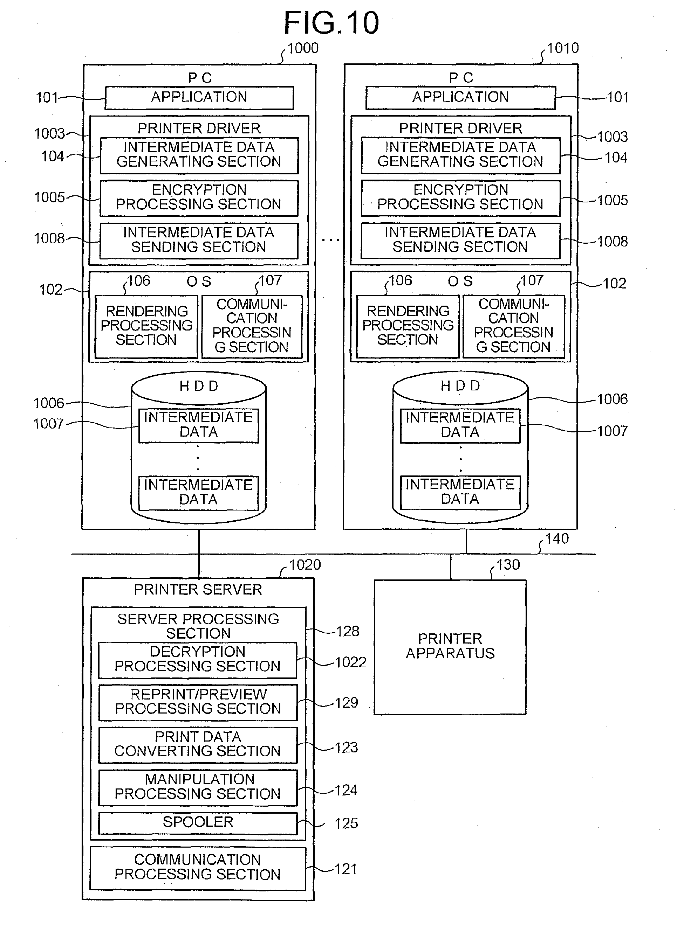

Fig. 10 is a block diagram showing a network structure and a functional structure of the printer system according to the third embodiment.

The printer system according to the third embodiment includes plural personal computers (PCs) 1000 to 1010 that request printing of a document file generated by an application, a printer server 1020 that generates print data in response to the print request from the PCs 1000 to 1010, and the printer apparatus 130 that prints the print data. The plural PCs 1000 to 1010, the printer server 1020, and the printer apparatus 130 are connected to the network 140 such as the Ethernet (registered trademark), whereby a LAN environment is established.

As in the first embodiment, the PCs 1000 to 1010 mainly include the application 101, the operating system (OS) 102, and a printer driver 1003. Note that the application 101 and the OS 102 have the same functions as those in the first embodiment.

The printer driver 1003 operates on the OS 102 and mainly includes the intermediate data generating section 104, an encryption processing section 1005, and an intermediate data sending section 1008.

As in the first embodiment, the intermediate data generating section 104 generates intermediate data of a format independent of the printer apparatus 130 from graphic image data generated from document data for which printing is requested.

The encryption processing section 1005 encrypts the intermediate data generated by the intermediate data generating section 104 using an encryption key designated by a user or the like according to a public key cryptography, a secret key cryptography, or the like, and stores the encrypted intermediate data in a HDD 1006 in the PC.

The intermediate data sending section 1008 selects intermediate data 1007 to be an object of reprint and preview out of the intermediate data 1007 stored in the HDD 1006 and sends the selected intermediate data 1007 to the printer server 1020 via the communication processing section 107.

The HDD 1006 stores intermediate data and various data and has a folder (or directory) for intermediate data storage. In addition, such a folder may be established as a part of a network file system such that the folder can be referred to from the printer server 1020.

The printer server 1020 converts the intermediate data stored in the HDD 1006 of the PCs 1000 to 1010 into print data dependent on the printer apparatus 130 according to a reprint request or a preview request from the PCs 1000 to 1010 and sends the print data to the printer apparatus 130.

The printer server 1020 mainly includes the communication processing section 121 and the server processing section 128 that are parts of the OS. The communication processing section 121 has the same function as that in the first embodiment.

The server processing section 128 operates as a server using the printer drivers 1003 operating in the PCs 1100 to 1010 as clients to realize various functions and realizes various functions as a printer server. The server processing section 128 mainly includes a decryption processing section 1022, the reprint/preview processing section 129, the print data converting section 123, the manipulation processing section 124, and the spooler 125.

The decryption processing section 1022 receives the encrypted intermediate data 127 from the PCs 1000 to 1010 and decrypts the received intermediate data with an encryption key. Note that the encryption key is acquired by transmission from the PCs 1000 to 1010.

The reprint/preview processing section 129, the print data converting section 123, the manipulation processing section 124, and the spooler 125 have the same functions as those in the printer server 120 according to the first embodiment.

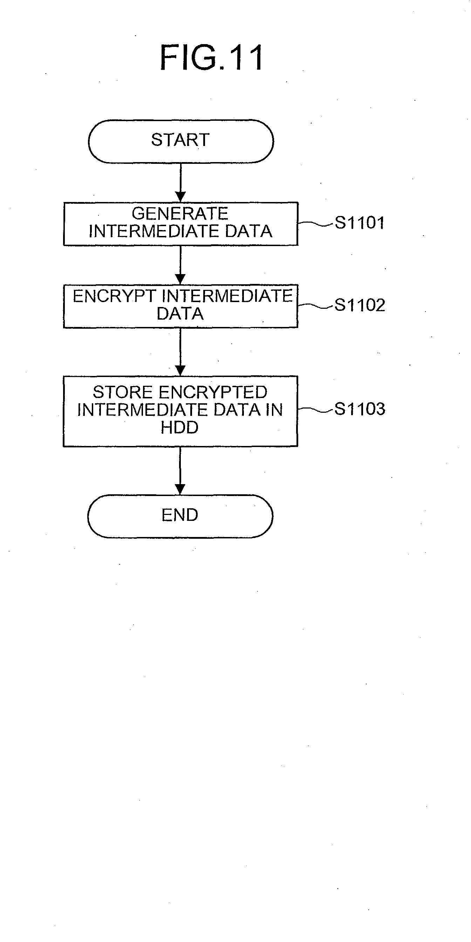

Next, generation processing and reprint processing for intermediate data by the printer system according to this embodiment constituted as described above will be explained. In this embodiment, it is assumed that intermediate data generated by the PC 1010 is used for reprinting by the PC 1000. Fig. 11 is a flowchart showing a procedure of generation processing for intermediate data by the PC 1000.

In the PC 1000, when printing of a document data generated by the application 101 is requested, the rendering processing section 106 of the OS 102 generates a graphic image from the document data, and the intermediate data generation section 104 generates intermediate data of a format independent of the printer apparatus 130 as shown in Figs. 2A and 2B from this graphic image (step S1001).

Next, the encryption processing section 1005 applies encryption processing to the generated intermediate data with an encryption key like a public key or a secret key (step S1002). Here, as the encryption key, an encryption key designated by a user of the application in advance is used. Then, the encryption processing section 1005 stores the encrypted intermediate data in the HDD 1006 in the PC (step S1003).

In this way, the intermediate data 127 stored in the HDD 1006 is subjected to the decryption processing by the decryption processing section 1022 of the server processing section 128, and then converted into print data by the print data converting section 123 and sent to the printer apparatus 130 by the spooler 125.

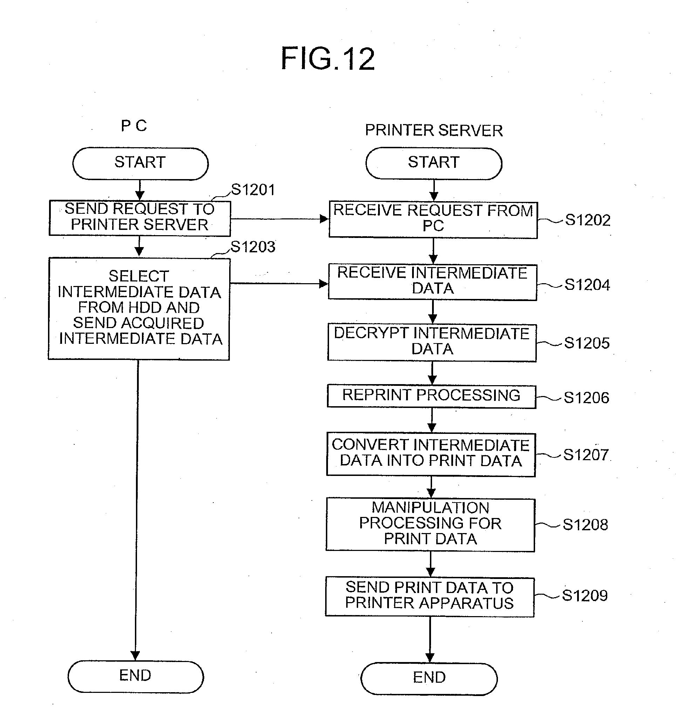

Next, reprint processing using the intermediate data 1007 stored in the HDD 1006 of the PC will be explained. Fig. 12 is a flowchart showing a procedure of the reprint processing.

When the application 101 of the PC 1000 sends a reprint request to the printer server 1020 (step S1201), the communication processing section 121 receives the request from the PC 1000 (step S1202). Next, in the PC 1000, the intermediate data sending section 1008 selects the intermediate data 1007 to be an object of the reprint request from the HDD 1006 and sends the selected intermediate data 1007 to the printer server 1006 (step S1203).

In the printer server 1020, the decryption processing section 1022 receives the intermediate data sent from the PC 1000 via the communication processing section 121 (step S1204) and applies decryption processing to the received intermediate data (step S1205). The reprint processing, the print data conversion processing, the manipulation processing, and the processing for transmission to the printer apparatus 130 for the intermediate data after this are performed in the same manner as in the printer server according to the first embodiment.

Note that, when a preview request is received from the application 101 of the PC 1000, the reprint/preview processing section 129 sends the intermediate data decrypted in step S1205 to the PC 1000 that has sent the request, and the application 101 of the PC 1000 performs preview processing.

In this way, in the printer system according to the third embodiment, the PCs 1000 to 1010 generate intermediate data independent of the printer apparatus 130 from document data, which is a print object, created by the application 101 and then store the intermediate data in the HDD 1006 of the PCs 1000 to 1010. Thus, when the intermediate data is reused, the intermediate data is sent from the PCs 1000 to 1010 to the printer server 1020 in an encrypted state, and the intermediate data flowing on the network 140 can be prevented from being intercepted by a holder in bad faith.

Note that, in the printer system of this embodiment, the reprint/preview processing section 129, the print data converting section 123, the manipulation processing section 124, and the spooler 125 are provided on the printer server 1020 side. However, all or a part of these sections may be provided on the PCs 1000 to 1010 side. For example, all of the reprint/preview processing section 129, the print data converting section 123, the manipulation processing section 124, and the spooler 125 are provided in the PCs 1000 to 1010. In this case, the printer system only has to be constituted such that, after intermediate data is decrypted on the printer server 1020 side, the decrypted intermediate data is sent to the PCs 1000 to 1010, and the reprint/preview processing, the print data converting processing, the manipulation processing, and the processing for transmission to the printer apparatus 140 are performed on the PCs 1000 to 1010 side.

A fourth embodiment of the present invention will be explained now. The printer systems according to the first to the third embodiments perform encryption processing for intermediate data on a PC side. However, a printer system according to a fourth embodiment performs encryption processing for intermediate data on a printer server side and stores the intermediate data in a HDD of the printer server.

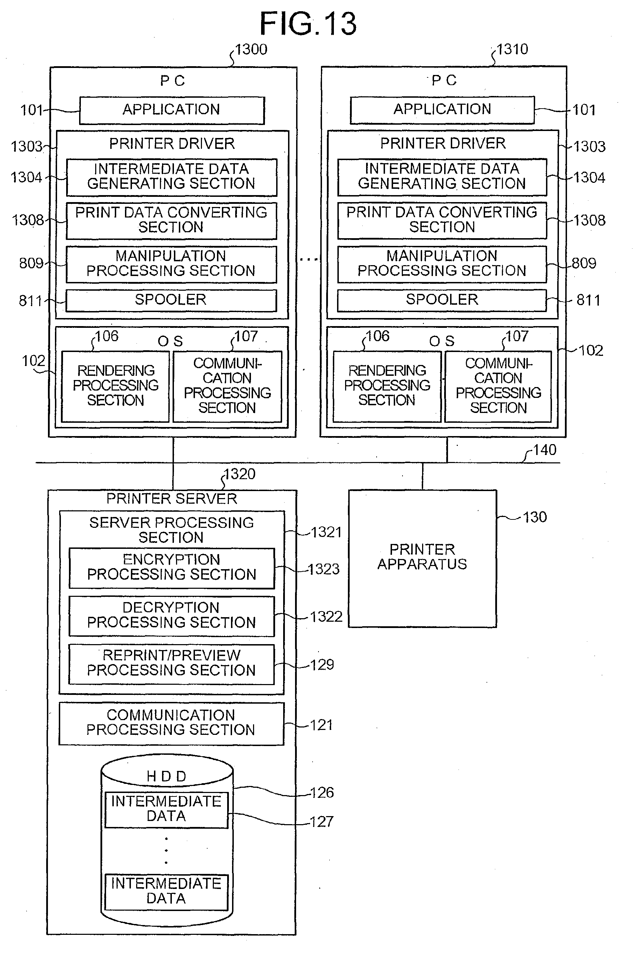

Fig. 13 is a block diagram showing a network structure and a functional structure of the printer system according to the fourth embodiment.

The printer system according to the fourth embodiment includes plural PCs 1300 to 1310 that request printing of a document file generated by an application, a printer server 1320 that performs encryption processing and decryption processing for intermediate data in response to a print request from the PCs 1300 to 1310, and the printer apparatus 130 that prints the print data. The plural PCs 1300 to 1310, the printer server 1320, and the printer apparatus 130 are connected to the network 140 such as the Ethernet (registered trademark), whereby a LAN environment is established.

The PCs 1300 to 1310 constitute client terminals in the present invention and mainly include the application 101, the OS 102, and a printer driver 1303. Note that the application 101 and the OS 102 have the same functions as those in the first embodiment.

The printer driver 1303 operates on the OS 102 and mainly includes an intermediate data generating section 1304, a print data converting section 1308, the manipulation processing section 809, and the spooler 811.

The intermediate data generating section 1304 generates intermediate data of a format independent of the printer apparatus 130 from graphic image data generated from document data, for which printing is requested, and stores the intermediate data in the HDD 126 of the printer server 1320.

The print data converting section 1308 receives decrypted intermediate data from the printer server 1320 and converts the received intermediate data into print data of a data format dependent on the printer apparatus 130. Note that the manipulation processing section 809 and the spooler 811 have the same functions as those in the second embodiment.

The printer server 1320 mainly includes the communication processing section 121, an encryption processing section 1323, a decryption processing section 1322, and the reprint/preview processing section 129, which are parts of the OS, and the HDD 126. As in the first embodiment, the communication processing section 121 controls communication between the printer server 1320 and the apparatuses on the network 140 such as the PCs 1300 to 1310 and the printer apparatus 130.

The HDD 126 stores intermediate data and various data. A folder (or directory) for intermediate data storage constitutes a network file system, and data can be written in the folder and referred to from the PCs 1300 to 1310 side.

The encryption processing section 1323 receives intermediate data from the PCs 1300 to 1310 via the communication processing section 121, encrypts the received intermediate data using an encryption key designated by a user or the like according to a public key cryptography or a secret key cryptography, and stores the encrypted intermediate data in the HDD 126.

The decryption processing section 1322 reads out the encrypted intermediate data 127 from the HDD 126 and decrypts the intermediate data 127 with an encryption key according to a request from the PCs 1300 to 1310. Here, the encryption key is acquired by reception from the PCs 1300 to 1310.

As in the first embodiment, the reprint/preview processing section 129 performs reprint and preview processing using decrypted intermediate data. More specifically, the reprint/preview processing section 129 performs processing for sending decrypted intermediate data to be an object of a reprint request to the PCs 1300 to 1310, sending single intermediate data generated by combining plural decrypted data to the PCs 1300 to 1310, and sending the decrypted intermediate data to the PCs 1300 to 1310 that have sent a preview request.

As in the second embodiment, the HDD 126 stores intermediate data and various data. A folder (or directory) for intermediate data storage constitutes a network file system, and data can be written in the folder and referred to from the PCs 1300 to 1310 side.

Next, generation processing and reprint processing for intermediate data by the printer system according to this embodiment constituted as described above will be explained. In this embodiment, it is assumed that the PC 1300 generates intermediate data, and the PC 1310 uses the intermediate data for reprinting.

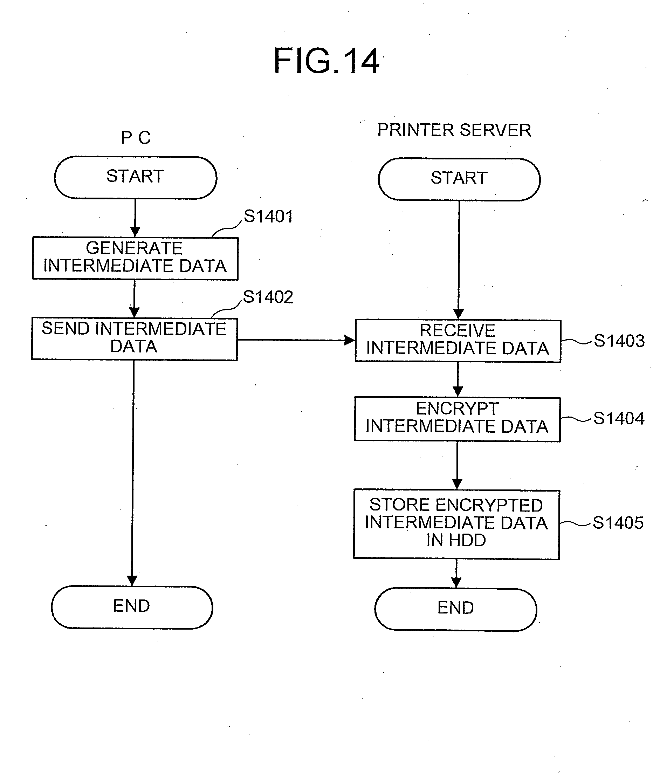

Fig. 14 is a flowchart showing a procedure of generation processing for intermediate data by the PC 1300. In the PC 1300, when printing of document data generated by the application 101 is requested, the rendering processing section 106 of the OS 102 generates a graphic image from the document data, and the intermediate data generating section 1304 generates intermediate data of a format independent of the printer apparatus 130 as shown in Figs. 2A and 2B from this graphic image (step S1401). Then, the intermediate data generating section 1302 sends the generated intermediate data to the printer server 1320 (step S1402).

In the printer server 1320, the encryption processing section 1323 receives the intermediate data from the PC 1300 via the communication processing section 121 (step S1403) and applies encryption processing to the received intermediate data with an encryption key like a public key or a secret key (step S1404). Here, as the encryption key, an encryption key designated by a user of the application in advance is received and used. In addition, the encryption processing is performed in the same manner as the first embodiment. Then, the encryption processing section 1323 stores the encrypted intermediate data in the HDD 126 (step S1405).

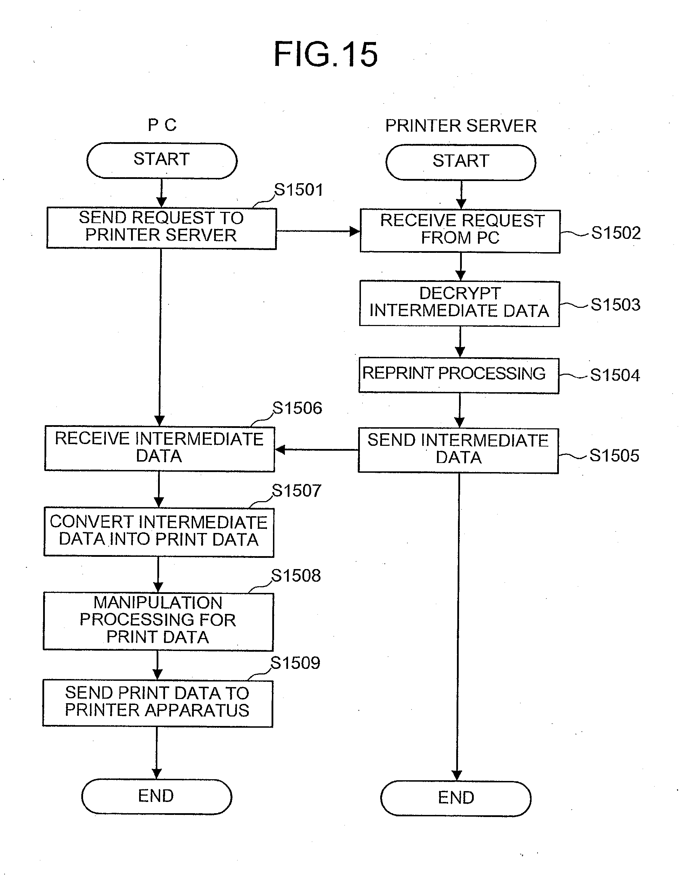

Next, reprint processing using the intermediate data 127 stored in the HD 126 of the printer server 1320 will be explained. Fig. 15 is a flowchart showing a procedure of the reprint processing by the printer server 1320.

It is assumed that a user of the PC 1310 acquires an encryption key for intermediate data from a user of the PC 1300. When the application 101 of the PC 1310 sends a reprint request to the printer server 1320 (step S1501), the communication processing section 121 of the printer server 1320 receives such a request (step S1502), and the decryption processing section 1322 reads out the intermediate data 127, which has become an object of the reprint request, from the HDD 126 and applies decryption processing to the intermediate data 127 (step S1503). Here, the intermediate data 127, which is the object of the request, is read out from the HDD 126 entirely, and the decryption processing is applied to respective pieces of information in the intermediate data 127. In addition, the encryption processing is performed in the same manner as the first embodiment.

Then, the reprint/preview processing section 129 performs reprint processing (step S1504). More specifically, the reprint/preview processing section 129 combines plural intermediate data subjected to the decryption processing to generate single intermediate data. Subsequently, the reprint/preview processing section 129 sends this intermediate data to the PC 1310 (step S1505).

In the PC 1310, the communication processing section 107 receives the intermediate data from the printer server 1320 (step S1506), and the print data converting section 1308 converts the intermediate data into print data of a format depending upon the printer apparatus 130, for example, a PDL format (step S1507). Then, the manipulation processing section 809 applies various kinds of manipulation processing to the print data (step S1508), and the spooler 811 sends the processed print data to the printer apparatus 130 through the network 140 via the communication processing section 107 (step S1509).

Note that, when a preview request is received from the application 101, the reprint/preview processing section 129 sends the intermediate data decrypted in step S1503 to the PC 1310, and preview processing is performed.

In this way, in the printer system according to the fourth embodiment, the printer server 1320 receives intermediate data independent of the printer apparatus 130 from the PCs 1300 to 1310, applies the encryption processing to the intermediate data, stores the encrypted intermediate data in the HDD 126, and when the intermediate data is reused, applies the decryption processing and the reprint processing to the encrypted intermediate data stored in the HDD 126, and sends the intermediate data to the PCs 1300 to 1310. Thus, even when the encryption processing or the decryption processing cannot be performed due to limitation on performance and functions of the PCs 1300 to 1310, the encryption processing and the decryption processing are performed on the printer server side only if users of the PCs 1300 to 1310 can acquire an encryption key. Therefore, efficient print processing can be performed reusing the intermediate data while security of the intermediate data is improved.

Note that, in the printer system according to this embodiment, the reprint/preview processing section 129 is provided on the printer server 1320 side. However, the printer system may be constituted such that the reprint/preview processing section 129 is provided on the PCs 1300 to 1310 side, intermediate data is decrypted and reprint/preview processing is applied to the decrypted intermediate data on the printer server 1320 side, and processing after that is performed on the PCs 1300 to 1310 side.

A fifth embodiment of the present invention will be explained now. In the printer systems according to the first to the fourth embodiments, reprint processing using intermediate data is performed using a printer server using printer drivers of PCs as clients. However, a printer system according to the fifth embodiment performs reprint processing with respect to a printer apparatus using only a PC serving as a client terminal.

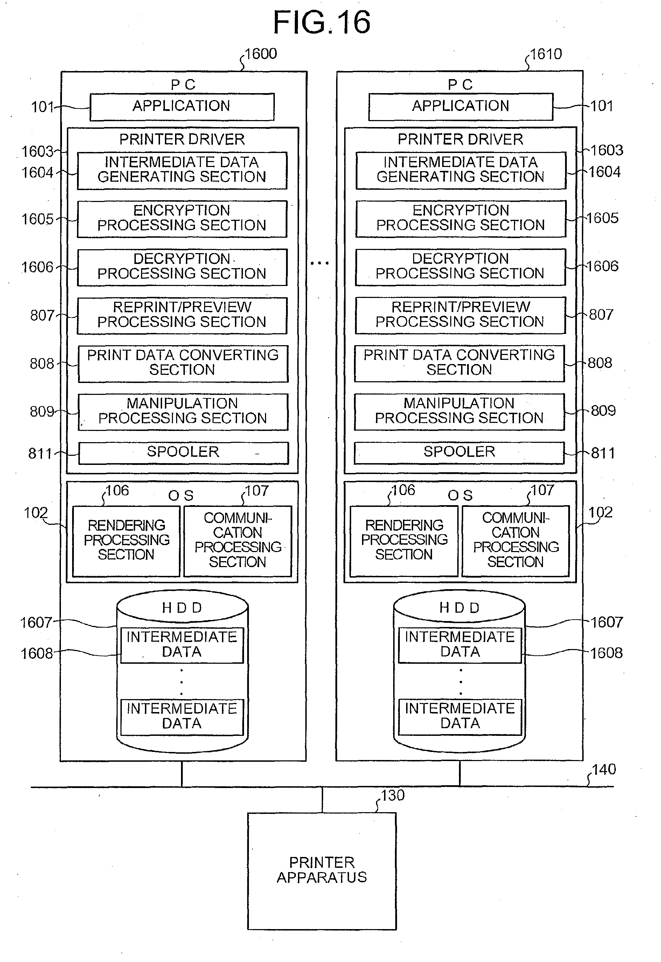

Fig. 16 is a block diagram showing a network structure and a functional structure of the printer system according to the fifth embodiment.

The printer system according to the fifth embodiment includes plural PCs 1600 to 1610 that generate intermediate data from a document file generated by an application and converts the intermediate data into print data and the printer apparatus 130 that prints the print data. The plural PCs 1600 to 1610 and the printer apparatus 130 are connected to the network 140 such as the Ethernet (registered trademark), whereby a LAN environment is established.

The PCs 1600 to 1610 constitute client terminals in the present invention and mainly include the application 101, the operating system (OS) 102, a printer driver 1603, and a HDD 1607. Note that the applications 101 and the OS 102 have the same functions as those in the first embodiment.

The printer driver 1603 operates on the OS 102 and mainly includes an intermediate data generating section 1604, an encryption processing section 1605, a decryption processing section 1606, the reprint/preview processing section 807, the print data converting section 808, the manipulation processing section 809, and the spooler 811. Note that the intermediate data generating section 1604 has the same function as that in the first embodiment.

The encryption processing section 1605 encrypts intermediate data generated by the intermediate data generating section 1604 using an encryption key designated by a user or the like according to a public key cryptograph, a secret key cryptograph, or the like and stores the encrypted intermediate data in the HDD 1607.

The decryption processing section 806 reads out encrypted intermediate data 1608 from the HDD 1607 and decrypts the intermediate data 1608 with an encryption key.

The reprint/preview processing section 807, the print data converting section 808, the manipulation processing section 809, and the spooler 811 have the same functions as those in the second embodiment.

The HDD 1607 stores intermediate data and various data. One or plural intermediate data are stored in a folder (or directory) for intermediate data storage.

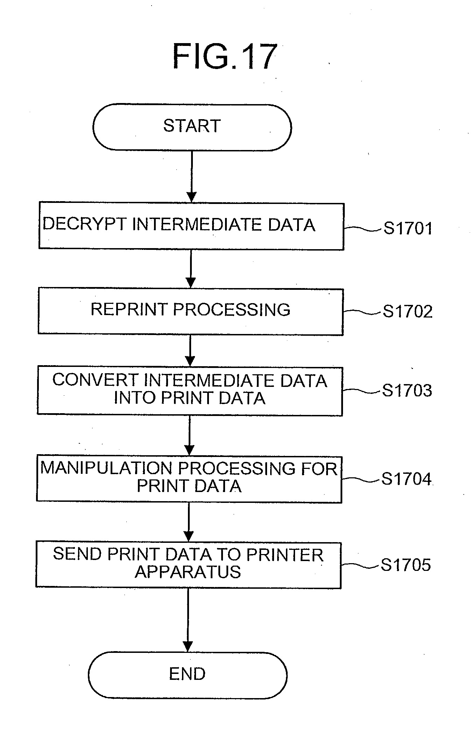

Next, reprint processing by the printer system according to this embodiment constituted as described above will be explained. In this embodiment, it is assumed that intermediate data generated by the PC 1600 is used for reprinting by the PC 1610. Generation processing for intermediate data is performed in the same manner as the printer system according to the third embodiment, and the intermediate data is stored in the HDD 1607 of the PC 1600. Fig. 17 is a flowchart showing a procedure of the reprint processing.

When reprinting is requested by the application 101 of the PC 1610, the decryption processing section 1606 reads out the intermediate data 1608, which has become an object of the reprint request, from the HDD 1607 and applies decryption processing to the intermediate data 1608 (step S1701). Here, the intermediate data 1608, which is the object of the request, is read out from the HDD 1607 entirely, and the decryption processing applied to respective pieces of information in the intermediate data 1608. In addition, the decryption processing is performed in the same manner as the first embodiment.

Then, the reprint/preview processing section 807 performs reprint processing (step S1702). More specifically, the reprint/preview processing section 807 combines plural intermediate data subjected to the decryption processing to generate single intermediate data. Subsequently, the print data converting section 808 converts the intermediate data into print data of a format dependent on the printer apparatus 130, for example, a PDL format (step S1703). Then, the manipulation processing section 809 applies various kinds of processing to the print data (step S1704). The spooler 811 sends the processed print data to the printer apparatus 130 through the network 140 via the communication processing section 107 (step S1705).

When a preview request is received from the application 101, the reprint/preview processing section 807 delivers the intermediate data decrypted in step S1702 to the application 101, and preview processing is performed.

In this way, in the printer system of the fifth embodiment, the PCs 1600 to 1610 generate intermediate data independent of the printer apparatus 130 from document data, which is a print object, generated by the application 101, apply encryption processing to the encrypted intermediate data, store the encrypted intermediate data in the HDD 1607, apply decryption processing to the encrypted intermediate data stored in the HDD 1607 when the intermediate data is reused, apply reprint processing to the intermediate data to convert the intermediate data into print data dependent on the printer apparatus 130, apply processing to the print data, and send the print data to the printer apparatus 130. Thus, the intermediate data can be prevented from being used illegally by a malicious user, and efficient print processing can be performed using the intermediate data while security of the intermediate data is improved.

A sixth embodiment of the present invention will be explained now. The printer systems according to the first to the fifth embodiments include a printer server using PCs as clients and a printer apparatus. A printer system of the sixth embodiment includes a multifunction product having a server function and makes a printer server unnecessary.

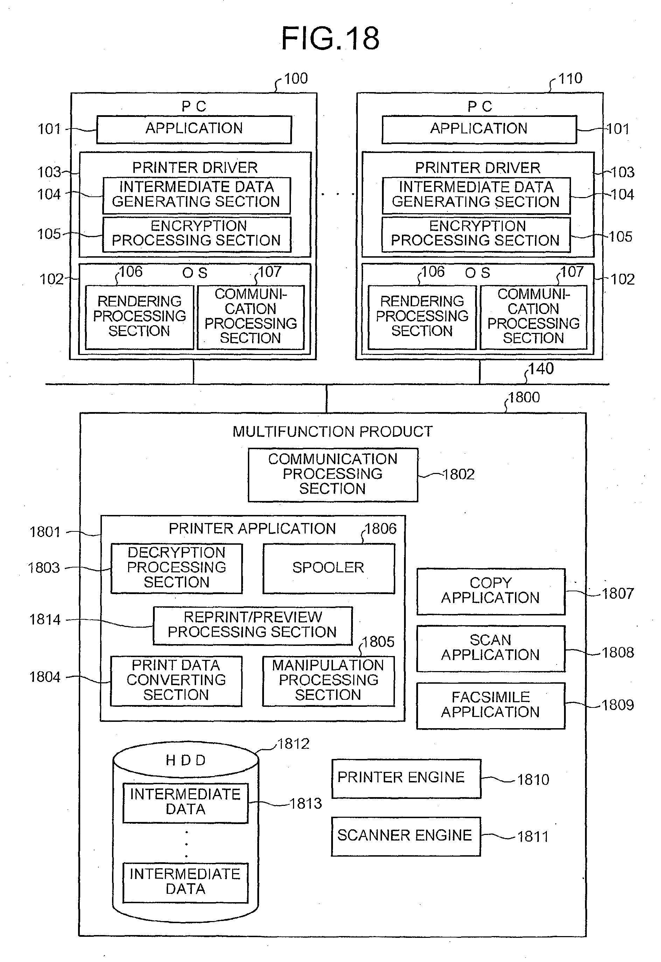

Fig. 18 is a block diagram showing a network structure and a functional structure of the printer system according to the sixth embodiment.

The printer system according to the sixth embodiment includes plural personal computers (PCs) 100 to 110 that request printing of a document file generated by an application and a multifunction product 1800 that generates print data in response to the print request from the PCs 100 to 110 and prints the print data. The plural PCs 100 to 110 and the multifunction product 1800 are connected to the network 140 such as the Ethernet (registered trademark), whereby a LAN environment is established.

The PCs 100 to 110 constitute client terminals in the present invention and mainly include the application 101, the operating system (OS) 102, and the printer driver 103. The structure of the PCs 100 to 110 is the same as that in the first embodiment.

The multifunction product 1800 incorporates functions of apparatuses such as a printer, a copying machine, a facsimile, and a scanner in one housing and has a server function using the PCs 100 to 110 as clients. As shown in Fig 18, the multifunction product 1800 of this embodiment mainly includes a printer application 1801, a copy application 1807, a scan application 1808, a facsimile application 1809, a communication processing section 1802 that is a part of an OS, a printer engine 1810, a scanner engine 1811, and a HDD 1812.

The printer application 1801 is an application for a printer having a PDL, a PCL, and a PS and functions as a printer server using the PCs 100 to 110 as clients.

The printer application 1801 includes a decryption processing section 1803, a reprint/preview processing section 1814, a print data converting section 1804, a manipulation processing section 1805, and a spooler 1806.

The decryption processing section 1803 reads out encrypted intermediate data 1813 from the HDD 1812 and decrypts the intermediate data 1813 with an encryption key. Note that the encryption key is acquired by reception from the PCs 100 to 110.

The reprint/preview processing section 1814 performs reprint and preview processing using the intermediate data decrypted by the decryption processing section 1803 according to a request from the PCs 100 to 110. More specifically, reprint/preview processing section 1814 performs processing for delivering decrypted intermediate data to be an object of a reprint request to the print data converting section 1804, delivering single intermediate data generated by combining plural decrypted data to the print data converting section 1804, and sending the decrypted intermediate data to the PCs 100 to 110 that have sent a preview request.

The print data converting section 1804 converts the intermediate data decrypted by the decryption processing section 1803 or the intermediate data generated by the reprint/preview processing section 1814 into print data of a data format dependent on the printer engine 1810. For example, the PDL corresponds to such a format of print data.

The manipulation processing section 1805 applies manipulation processing such as addition or deletion of supplementary data like a creator's name and a date of creation to print data.

The spooler 1806 accumulates print data or print data subjected to processing as printer jobs and sequentially sends the printer jobs to the printer apparatus 130.

The copy application 1807 executes copy processing of applying image processing to an image scanned by the scanner engine 1811 and sending the image to the printer engine 1810.

The scan application 1808 executes scanner processing of applying image processing to an image scanned by the scanner engine 1811.

The facsimile application 1809 executes facsimile processing of applying image processing to an image scanned by the scanner engine 1811 to send the image by facsimile and storing an image received by facsimile in the HDD 1812.,

The printer engine 1810 is a hardware resource for executing print processing, and the scanner engine 1811 is a hardware resource for executing scan processing.

The communication processing section 1802 controls communication between the multifunction product 1800 and apparatuses on the network 140 such as the PCs 100 to 110 and the printer apparatus 130 according to a protocol such as TCP/IP.

The HDD 1812 stores intermediate data and various data. A folder (or directory) for intermediate data storage constitutes a network file system, and data can be written in the folder and referred to from the PCs 100 to 110 side.

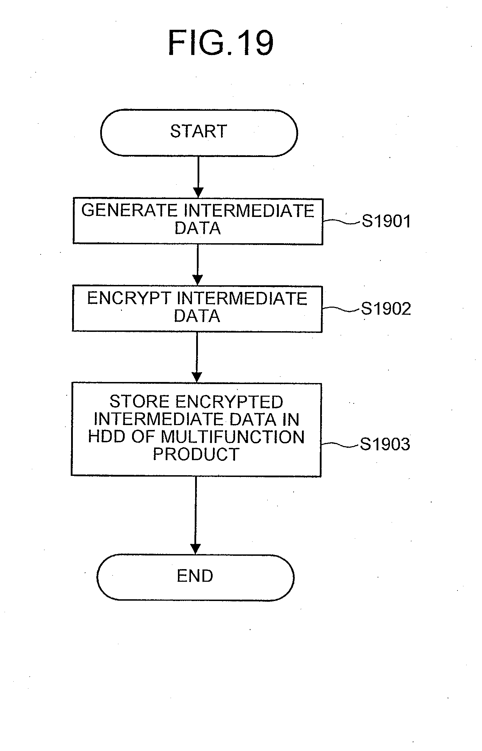

Next, generation processing and reprint processing for intermediate data by the printer system according to this embodiment constituted as described above will be explained. In this embodiment, it is assumed that intermediate data generated by the PC 100 is used for reprinting by the PC 110. Fig. 19 is a flowchart showing a procedure of generation processing for intermediate data by the PC 100.

In the PC 100, when printing of document data generated by the application 101 is requested, the rendering processing section 106 of the OS 102 generates a graphic image from document data, and the intermediate data generating section 104 generates intermediate data of a format independent of the printer apparatus 130 as shown in Figs. 2A and 2B from this graphic image (step S1901).

Next, the encryption processing section 105 applies encryption processing to the generated intermediate data with an encryption key like a public key or a secret key (step S1902). Here, as the encryption key, an encryption key designated by a user of the application in advance is used. In addition, the encryption processing is performed in the same manner as the first embodiment.

Then, the encrypted intermediate data is stored in the HDD 126 of the multifunction product 1800 via the communication processing section 107 (step S1903).

The intermediate data 127 stored in the HD 126 of the printer server 120 in this way is subjected to decryption processing by the decryption processing section 1803 of the multifunction product 1800, and then converted into print data by the print data converting section 1804 and sent to the printer ending 1810 by the spooler 1806.

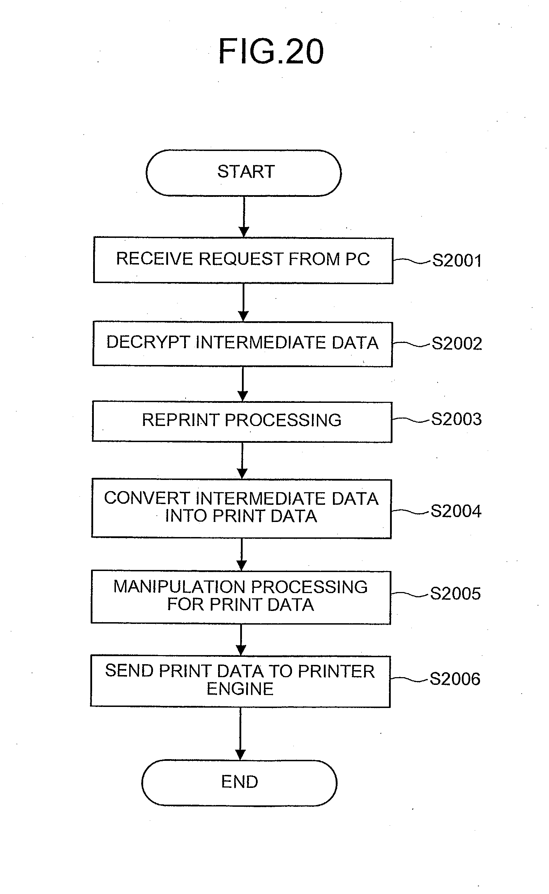

Next, reprint processing using the intermediate data 1813 stored in the HDD 1812 of the multifunction product 1800 will be explained. Fig. 20 is a flowchart showing a procedure of the reprint processing.

When the application 101 of the PC 110 sends a reprint request to the multifunction product 1800, the communication processing section 1802 receives the request from the PC 110 (step S2001), and the decryption processing section 1803 reads out the intermediate data 1813, which has become an object of the reprint request, from the HDD 1812 and applies decryption processing to the intermediate data 1813 (step S2002). Here, the intermediate data 1813, which is the object of the request, is read out from the HDD 1812 entirely, and the decryption processing is applied to respective pieces of information in the intermediate data 1813. In addition, the decryption processing is performed in the same manner as the first embodiment.

Then, the reprint/preview processing section 1814 combines plural intermediate data subjected to the decryption processing to generate single intermediate data (sep S2003). Subsequently, the print data converting section 1804 performs reprint processing (step S2004). More specifically, the print data converting section 1804 converts the intermediate data into print data of a format dependent on the printer engine 1810, for example, a PDL format. Then, the manipulation processing section 1805 applies various kinds of processing to the print data (step S2005). The spooler 1806 sends the processed print data to the printer engine 1810 via the communication processing section 1802 (step S2006).

When a preview request is received from the application 101 of the PC 110, the reprint/preview processing section 1814 sends the intermediate data decrypted in step S2002 to the PC 110 that has sent the request, and the application 101 of the PC 110 performs preview processing.

In this way, in the printer system according to the sixth embodiment, intermediate data independent of the printer engine 1870 is generated from document data, which is a print object, generated by the application 101 and is subjected to decryption processing, and the encrypted intermediate data is stored in the HDD 1812 of the multifunction product 1800. Thus, when reusable intermediate data is shared by plural users, the intermediate data, which is sent from the PCs 100 to 110 to the multifunction product 1800 on the network 140, can be prevented from being intercepted by a holder in bad faith. In addition, since the intermediate data shared by the plural users is stored in the HDD 126 of the multifunction product 1800 in an encrypted state, the intermediate data stored in the HDD 126 of the multifunction product 1800 can be prevented from being used illegally by a holder in bad faith.

Note that, in the printer system according to this embodiment, the reprint/preview processing section 1814, the print data converting section 1813, the manipulation processing section 1805, and the spooler 1806 are provided on the multifunction product 1800 side. However, all or a part of these sections may be provided on the PCs 100 to 110 side. For example, all of the reprint/preview processing section 1814, the print data converting section 1804, the manipulation processing section 1805, and the spooler 1806 are provided in the PCs 100 to 110. In this case, the printer system only has to be constituted such that, after intermediate data is decrypted o the multifunction product 1800 side, the decrypted intermediate data is sent to the PCs 100 to 110, and the reprint/preview processing, the print data conversion processing, the manipulation processing, and the processing for sending the intermediate data to the printer apparatus 130 are performed on the PCs 100 to 110 side.

A printer system according to a seventh embodiment of the present invention will be explained now. The printer system according to the sixth embodiment stores intermediate data on a multifunction product side such that the intermediate data can be used by plural PCs. However, a printer system according to the seventh embodiment stores intermediate data on a PC side.

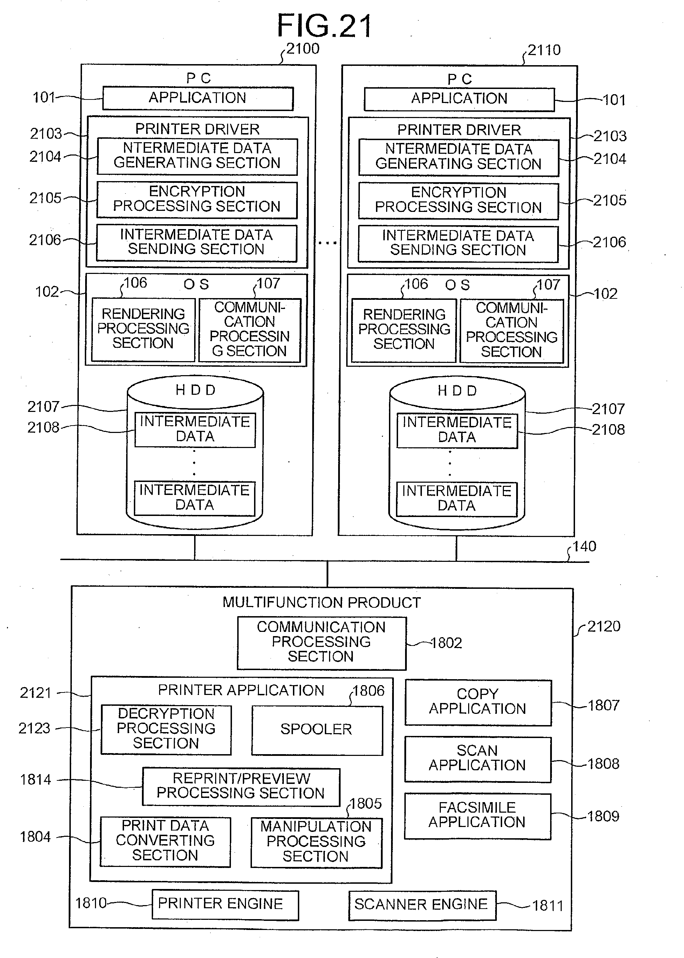

Fig. 21 is a block diagram showing a network structure and a functional structure of the printer system according to the seventh embodiment.

The printer system according to the seventh embodiment includes plural PCs 2000 to 2110 that generate intermediate data from a document file generated by an application and store the intermediate data and a multifunction product 2120 that generates print data and print the print data in response to a print request from the PCs 2000 to 2110. The plural PCs 2000 to 2110 and the multifunction product 2120 are connected to a network 140 such as the Ethernet (registered trademark), whereby a LAN environment is established.

As in the third embodiment, the PCs 2000 to 2110 mainly include the application 101, the operating system (OS) 102, the printer driver 1003, and the HDD 1006.

A printer driver 2103 operates on the OS 102 and mainly includes an intermediate data generating section 2104, an encryption processing section 2105, and an intermediate data sending section 2106.

As in the sixth embodiment, the intermediate data generating section 2104 generates intermediate data of a format independent of a printer apparatus from graphic image data generated from document data for which printing is requested.

The encryption processing section 2105 encrypts the intermediate data generated by the intermediate data generating section 2104 using an encryption key designated by a user or the like according to a public key cryptography, a secret key cryptography, or the like, and stores the encrypted intermediate data in a HDD 2107 in the PC.

The intermediate data sending section 2106 selects intermediate data 2108 to be an object of reprint and preview out of the intermediate data 2108 stored in the HDD 2107 and sends the selected intermediate data 2108 to the multifunction product 2120 via the communication processing section 107.

The HDD 2107 stores intermediate data and various data and has a folder (or directory) for intermediate data storage. In addition, such a folder may be established as a part of a network file system such that the folder can be referred to from the multifunction product 120.

As shown in Fig. 21, the multifunction product 2120 according to this embodiment mainly includes a printer application 2121, the copy application 1807, the scan application 1808, the facsimile application 1809, the communication processing section 1802 that is a part of an OS, the printer engine 1810, and the scanner engine 1811. Here, the copy application 1807, the scan application 1808, the facsimile application 1809, the communication processing section 1802, the printer engine 1810, and the scanner engine 1811 have the same structures and functions as those in the multifunction product 1800 according to the sixth embodiment.

The printer application 2121 is an application for a printer having a PDL, a PCL, and a PS and functions as a printer server using the PCs 2100 and 2110 as clients.

The printer application 1801 includes a decryption processing section 2123, the reprint/preview processing section 1814, the print data converting section 1804, the manipulation processing section 1805, and the spooler 1806.

The decryption processing section 2123 receives encrypted intermediate data 2108 from the PCs 2100 and 2110 and decrypts the received intermediate data 2108 with an encryption key. Note that the encryption key is acquired by transmission from the PCs 2100 and 2110.

Here, the reprint/preview processing section 1814, the print data converting section 1804, the manipulation processing section 1805, and the spooler 1806 have the same functions as those in the multifunction product 1800 according to the sixth embodiment.

Next, reprint processing for intermediate data by the printer system according to this embodiment constituted as described above will be explained. In this embodiment, it is assumed that intermediate data generated by the PC 2100 is used for reprinting by the PC 2100. Generation processing for intermediate data by the PC 2100 is the same as the generation processing in the third embodiment, and the intermediate data is stored in the HDD 2107 in the PC 2100.

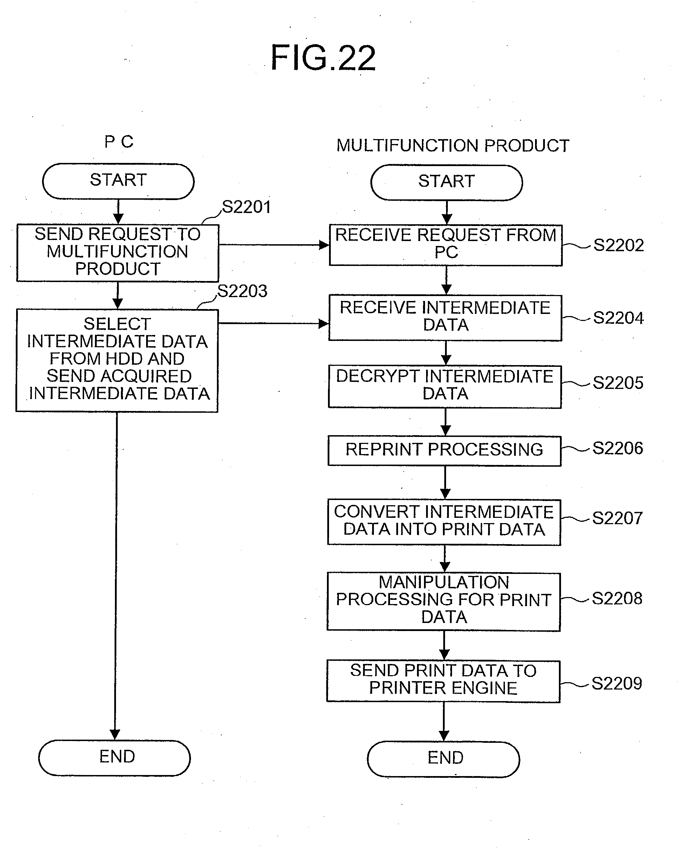

Fig. 22 is a flowchart showing a procedure of reprint processing by the multifunction product 2120. When the application 101 of the PC 2100 sends a reprint request to the multifunction product 2120, the communication processing section 1802 receives the request from the PC 2100 (step S2201). Next, in the PC 2100, the intermediate data sending section 2106 acquires the intermediate data 2108 to be an object of the reprint request from the HDD 2107 (step S2202) and sends the acquired intermediate data 2108 to the multifunction product 2120 (step S2203).

In the multifunction product 2120, the decryption processing section 2123 receives the intermediate data sent from the PC 2100 via the communication processing section 1802 (step S2204) and applies decryption processing to the received intermediate data (step S2205). The reprint processing, the print data converting processing, the manipulation processing, and the processing for transmission to the printer engine 1810 for the intermediate data after this are performed in the same manner as those in the multifunction product according to the sixth embodiment.

When a preview request is received from the application 101 of the PC 2100, the reprint/preview processing section 1804 sends the intermediate data decrypted in step S2205 to the PC 2100 that has requested preview, and the application 101 of the PC 2100 performs preview processing.

In this way, in the printer system according to the seventh embodiment, the PCs 2100 and 2110 generate intermediate data independent of the printer engine 1810 from document data, which is a print object, generated by the application 101 and apply decryption processing to the intermediate data, and then store the intermediate data in the HDD 2107 of the PCs 2100 and 2110. Thus, when the intermediate data is reused, the intermediate data is sent to the multifunction product 2120 from the PCs 2100 and 2110 in an encrypted state, and the intermediate data flowing on the network 140 can be prevented from being intercepted by a holder in bad faith.

Note that, in the printer system according to this embodiment, the reprint/preview processing section 1814, the print data converting section 1804, the manipulation processing section 1805, and the spooler 1806 are provided on the multifunction product 2120 side. However, all or a part of these sections may be provided on the PCs 2100 and 2110 side. For example, all of the reprint/preview processing section 1814, the print data converting section 1804, the manipulation processing section 1805, and the spooler 1806 are provided in the PCs 2100 and 2110. In this case, the printer system only has to be constituted such that, after intermediate data is decrypted on the multifunction product 2120 side, the decrypted intermediate data is sent to the PCs 2100 and 2110, and the reprint/preview processing, the print data conversion processing, the manipulation processing, and the processing for sending the intermediate data to the printer engine 1810 are performed on the PCs 2100 and 2110 side.

In addition, in the printer systems according to the sixth and the seventh embodiments, a multifunction product is used as a printer apparatus having a server function. However, the printer apparatus is not limited to the multifunction product, and an image forming apparatus other than the multifunction product may be used as long as the image forming apparatus as a server function and serves as a printer server using printer drivers in PCs as clients. In addition, in the case of the multifunction product, the applications of copy, facsimile, and the like may not be provided if only the printer application is provided.

Note that, in the printer systems according to the first to the seventh embodiments, after intermediate data is converted to generate print data of a PDL format or the like, manipulation processing is applied to the print data and, then, the print data is sent to a printer apparatus or a printer engine. However, the print data after conversion may be sent to the printer apparatus without being subjected to the manipulation processing.

In addition, in the printer systems according to the first to the seventh embodiments, plural intermediate data are combined to generate single intermediate data in the reprint processing. However, it is not always necessary to combine intermediate data, and respective intermediate data may be converted into print data separately.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A print data generation method for generating print data of a format dependent on a printer apparatus, which is connected to a network, from application data, which is a print object, generated by an application, comprising:
generating print independent data and rendering information that is independent of the printer apparatus, wherein the print independent data including job information, which includes attribute information concerning a print job and encryption information concerning encryption;
encrypting the rendering information that is in the print independent data to thereby generate encrypted print independent data; and
storing the encrypted print independent data in a storing unit.

2. The print data generation method according to claim 1, further comprising:
decrypting the encrypted print independent data that is stored in the storing unit to thereby obtain decrypted print independent data based on the encryption information of the job information;
converting the decrypted print independent data into print data of a format that is dependent on the printer apparatus; and
sending the print data to the printer apparatus.

3. The print data generation method according to claim 2, further comprising applying predetermined manipulation processing to the print data, wherein
at the sending, the print data, to which the manipulation processing is applied, is sent to the printer apparatus.

4. A computer program comprising program code means which, when executed on a computer system, instructs the computer system to effect the method of any one of claims 1 to 3.

5. A client terminal that sends a print request with respect to a printer apparatus (130) on a network to a printer server connected to the network, comprising:
an independent data generating unit (104) that generates, from application data, which is a print object, generated by an application, print independent data and rendering information that is independent of the printer apparatus (130), wherein the print independent data including job information, which includes attribute information concerning a print job and encryption information concerning encryption; and
an encrypting unit (105) that encrypts the rendering information that is in the print independent data and to thereby generate encrypted print independent data and sends the encrypted print independent data to the printer server.

6. The client terminal according to claim 5, further comprising:
a converting unit (613) that receives decrypted print independent data from the printer server and converts the received decrypted print independent data into print data, which is a print object, dependent on the printer apparatus (130); and
a sending unit (615) that sends the print data to the printer apparatus (130).

7. The client terminal according to claim 5 or 6, wherein the print independent data is intermediate data that is metadata for printing.

8. A client terminal that sends a print request with respect to a printer apparatus (130) on a network to a printer server connected to the network, comprising:
an independent data generating unit (104) that generates, from application data, which is a print object, generated by an application, print independent data and rendering information that is independent of the printer apparatus (130), wherein the print independent data including job information, which includes attribute information concerning a print job and encryption information concerning encryption;
an encrypting unit (105) that encrypts the rendering information that is in the print independent data and to thereby generate encrypted print independent data and sends the encrypted print independent data to the printer server;
a decrypting unit (806) that receives the encrypted print independent data from the printer server and decrypts the encrypted print independent data based on the encryption information of the job information to thereby obtain decrypted print independent data;
a converting unit (808) that converts the decrypted print independent data into print data, which is a print object, dependent on the printer apparatus (130); and
a sending unit (811) that sends the print data to the printer apparatus (130).

9. The client terminal according to claim 8, further comprising a manipulation processing unit (809) that applies predetermined manipulation processing to the print data, wherein the sending unit (811) sends the print data to which the manipulation processing is applied to the printer apparatus (130).

10. The client terminal according to claim 8 or 9, wherein the print independent data is intermediate data that is metadata for printing.

11. A client terminal that sends a print request with respect to a printer apparatus (130) on a network to a printer server connected to the network, comprising:
an independent data generating unit (104) that generates, from application data, which is a print object, generated by an application, print independent data and rendering information that is independent of the printer apparatus (130), wherein the print independent data including job information, which includes attribute information concerning a print job and encryption information concerning encryption;
an encrypting unit (1005) that encrypts the rendering information that is in the print independent data and to thereby generate encrypted print independent data; and
a storing unit (1006) that stores the encrypted print independent data.

12. The client terminal according to claim 11, wherein the print independent data is intermediate data that is metadata for printing.

13. A client terminal that sends a print request with respect to a printer apparatus (130) on a network to a printer server connected to the network, comprising:
an independent data generating unit (104) that generates, from application data, which is a print object, generated by an application, print independent data and rendering information that is independent of the printer apparatus (130), wherein the print independent data including job information, which includes attribute information concerning a print job and encryption information concerning encryption;
a sending unit (1008) that sends the print independent data to the printer server;
a converting unit (1308) that receives decrypted print independent data from the printer server and converts the decrypted print independent data into print data, which is a print object, dependent on the printer apparatus (130); and
a sending unit (811) that sends the print data to the printer apparatus (130).

14. The client terminal according to claim 13, further comprising a reprint processing unit (807) that performs reprint processing based on the decrypted print independent data to thereby generate reprinted print independent data, wherein the converting unit (1308) converts the reprinted print independent data into print data.

15. The client terminal according to claim 14, wherein
the reprint processing unit (807) combines plural decrypted print independent data to generate single reprinted print independent data.

16. The client terminal according to claim 14 or 15, wherein
the reprint processing unit (807) delivers plural decrypted print independent data to an application from whom a preview processing request is received

17. The client terminal according to any one of claims 13 to 16, wherein the print independent data is intermediate data that is metadata for printing.

18. A printer server that performs print processing with respect to a printer apparatus (130) connected to a network in response to a print request from a client terminal connected to the network, comprising:
a receiving unit that receives encrypted print independent data independent of the printer apparatus (130) from the client terminal;
a storing unit (126) that stores the encrypted print independent data;
a decrypting unit (122) that decrypts the encrypted print independent data stored in the storing unit (126) based on encryption information included in the print data according to a request from the client terminal to thereby generate decrypted print independent data;
a converting unit (123) that converts the decrypted print independent data into print data, which is a print object, dependent on the printer apparatus (130); and
a sending unit (125) that sends the print data to the printer apparatus (130).

19. The printer server according to claim 18, further comprising a manipulation processing unit (124) that applies predetermined manipulation processing to the print data, wherein
the sending unit (121) sends the print data to which the manipulation processing is applied to the printer apparatus (130).

20. The printer server according to claim 18 or 19, further comprising a reprint processing unit (129) that performs reprint processing based on the decrypted print independent data to thereby generate reprinted print independent data, wherein
the converting unit (123) converts the reprinted print independent data into print data.

21. The printer server according to any one of claims 18 to 20, wherein
the print independent data is intermediate data that is metadata for printing.

22. A printer server that performs print processing with respect to a printer apparatus (130) connected to a network in response to a print request from a client terminal connected to the network, comprising:
a receiving unit that receives encrypted print independent data from the client terminal;
a storing unit (126) that stores the encrypted print independent data; and
a sending unit (121) that sends the encrypted print independent data stored in the storing unit (126) to the client terminal according to a request from the client terminal.

23. The printer server according to claim 22, wherein the print independent data is intermediate data that is metadata for printing.

24. A printer server that performs print processing with respect to a printer apparatus (130) connected to a network in response to a print request from a client terminal connected to the network, comprising:
a decrypting unit (122) that receives encrypted print independent data from the client terminal and decrypts the encrypted print independent data based on encryption information included in the print independent data to thereby generate decrypted print independent data;
a converting unit (123) that converts the decrypted print independent data into print data, which is a print object, dependent on the printer apparatus (130); and
a sending unit (125) that sends the print data to the printer apparatus (130).

25. The printer server according to claim 24, further comprising a manipulation processing unit (124) that applies predetermined manipulation processing to the print data, wherein
the sending unit (125) sends the print data to which the manipulation processing is applied to the printer apparatus (130).

26. The printer server according to claim 24 or 25, further comprising a reprint processing unit (129) that performs reprint processing based on the decrypted print independent data to thereby generate reprinted print independent data, wherein
the converting unit (123) converts the reprinted print independent data into print data.

27. The printer server according to any one of claims 24 to 26, wherein
the print independent data is intermediate data that is metadata for printing.

28. A printer server that performs print processing with respect to a printer apparatus (130) connected to a network in response to a print request from a client terminal connected to the network, comprising:
an encrypting unit (1323) that receives print independent data including job information, which includes attribute information concerning a print job and encryption information concerning encryption, and rendering information independent of the printer apparatus (130) from the client terminal and encrypts the rendering information in the print independent data to thereby generate encrypted print independent data;
a storing unit (126) that stores the encrypted print independent data;
a decrypting unit (1322) that decrypts the encrypted print independent data stored in the storing unit (126) based on the encryption information of the job information to thereby obtain print independent data decrypted print independent data; and
a sending unit (121) that sends the decrypted print independent data to the client terminal.

29. The printer server according to claim 28, further comprising a reprint processing unit (129) that performs reprint processing based on the decrypted print independent data to thereby generate reprinted print independent data, wherein
the sending unit (121) sends the reprinted print independent data to the client terminal.

30. The printer server according to claim 29, wherein
the reprint processing unit (129) combines plural decrypted print independent data to generate single reprinted print independent data.

31. The printer server according to claim 29 or 30, wherein
the reprint processing unit (129) sends plural decrypted print independent data to a client terminal from whom a preview processing request is received.

32. The printer server according to any one of claims 28 to 31, wherein
the print independent data is intermediate data that is metadata for printing.

33. A print data generation apparatus that performs print processing with respect to a print apparatus connected to a network, comprising:
an independent data generating unit (1604) that generates, from application data, which is a print object, generated by an application, print independent data and rendering information that is independent of the printer apparatus (130), wherein the print independent data including job information, which includes attribute information concerning a print job and encryption information concerning encryption;
an encrypting unit (1605) that encrypts the rendering information that is in the print independent data and to thereby generate encrypted print independent data;
a storing unit (1607) that stores the encrypted print independent data;
a decrypting unit (1606) that decrypts the encrypted print independent data stored in the storing unit (1607) based on encryption information of the job information to thereby obtain decrypted print independent data;
a converting unit (808) that converts the decrypted print independent data into print data dependent on the printer apparatus (130); and
a sending unit (811) that sends the print data to the printer apparatus (130).

34. The print data generation apparatus according to claim 33, further comprising a reprint processing unit (807) that performs reprint processing based on the decrypted print independent data to thereby generate reprinted print independent data, wherein
the converting unit (808) converts the reprinted print independent data into print data.

35. The print data generation apparatus according to claim 34, wherein
the reprint processing unit (807) combines plural decrypted print independent data to generate single reprinted print independent data.

36. The print data generation apparatus according to claim 34 or 35, wherein
the reprint processing unit (807) delivers plural decrypted print independent data to an application from whom a preview processing request is received.

37. The print data generation apparatus according to any one of claims 33 to 36, wherein
the print independent data is intermediate data that is metadata for printing.

38. An image forming apparatus that performs image formation processing with respect to a printer engine in response to a print request from a client terminal connected to a network, comprising:
a receiving unit (1802) that receives print independent data including job information, which includes attribute information concerning a print job and encryption information concerning encryption, and rendering information independent of the printer engine from the client terminal;
a storing unit (1812) that stores the print independent data;
a decrypting unit (1803) that decrypts encrypted print independent data stored in the storing unit (1812) based on the encryption information of the job information according to a request from the client terminal to thereby generate decrypted print independent data;
a converting unit (1804) that converts the decrypted print independent data into print data, which is a print object, dependent on the printer engine; and
a sending unit (1806) that sends the print data to the printer engine.

39. The image forming apparatus according to claim 38, further comprising a manipulation processing unit (1805) that applies predetermined manipulation processing to the print data, wherein
the sending unit (1806) sends the print data to which the manipulation processing is applied to the printer apparatus (130).

40. The image forming apparatus according to claim 38 or 39, further comprising a reprint processing unit (1814) that performs reprint processing based on the decrypted print independent data to thereby generate reprinted print independent data, wherein
the converting unit (1804) converts the reprinted print independent data into print data.

41. The image forming apparatus according to any one of claims 38 to 40, wherein
the print independent data is intermediate data that is metadata for printing.

42. An image forming apparatus that performs image formation processing with respect to a printer engine in response to a print request from a client terminal connected to a network, comprising:
a decrypting unit (2123) that receives encrypted print independent data including job information, which includes attribute information concerning a print job and encryption information concerning encryption, and rendering information independent of the printer engine from the client terminal and decrypts the encrypted print independent data based on the encryption information of the job information to thereby generate decrypted print independent data;
a converting unit (1804) that converts the decrypted print independent data into print data, which is a print object, dependent on the printer engine; and
a sending unit (1806) that sends the print data to the printer engine.

43. The image forming apparatus according to claim 42, further comprising a manipulation processing unit (1805) that applies predetermined manipulation processing to the print data, wherein
the sending unit (1806) sends the print data to which the manipulation processing is applied to the printer apparatus (130).

44. The image forming apparatus according to claim 42 or 43, further comprising a reprint processing unit (1814) that performs reprint processing based on the decrypted print independent data to thereby generate reprinted print independent data, wherein
the converting unit (1804) converts the reprinted print independent data into print data.

45. The image forming apparatus according to claim 44, wherein
the reprint processing unit (1804) combines plural decrypted print independent data to generate single reprinted print independent data.

46. The image forming apparatus according to claim 44 or 45, wherein
the reprint processing unit (1804) delivers plural decrypted print independent data to an application from whom a preview processing request is received.

47. The image forming apparatus according to any one of claims 42 to 46, wherein
the print independent data is intermediate data that is metadata for printing.
